# EUROPEAN PATENT APPLICATION

(11) **EP 4 656 672 A1**
(43) Date of publication of application: **03.12.2025**
(21) Application number: 24747190.7
(22) Date of filing: 17.01.2024
(51) Int. Cl.: C08J 3/20, C08K 5/19, C08K 5/29, C08K 5/057, C08K 5/541, C08K 5/544, C08L 101/10, C09K 3/10

(54) **METHOD FOR PRODUCING CURABLE COMPOSITION**

(30) Priority: 23.01.2023 JP 2023007743
(71) Applicant: Kaneka Corporation, Osaka-shi, Osaka 530-8288 (JP)
(72) Inventor: ZHANG, Dong, Hyogo 676-8688 (JP)
(74) Representative: Vossius & Partner Patentanwälte Rechtsanwälte mbB
(86) International application number: PCT/JP2024/001165
(87) International publication number: WO 2024/157860

(57) **Abstract**

Provided is a method for producing a curable composition containing an organic polymer (A) having a reactive silicon group represented by -SiR¹₃₋ₐXₐ, a curing catalyst (B), and a silane compound (C) having a hydrolyzable silicon group and an amino group and having a molecular weight of 100 to 1500. The curing catalyst (B) includes an amidine structure-containing compound (b1e) represented by R²N=CR³-NR⁴₂ or an ammonium hydroxide compound (b1f), and a titanium compound or condensation product thereof (b2). The titanium compound is represented by Ti(OR⁹)_{d}Y_{4-d}. The method includes mixing the organic polymer (A) and the curing catalyst (B) to obtain an intermediate mixture, and then mixing the intermediate mixture and the silane compound (C).

## Description

### Technical Field

The present invention relates to a method for producing a curable composition containing an organic polymer having a silicon group that has a hydroxy or hydrolyzable group bonded to a silicon atom and that is capable of forming a siloxane bond to form a crosslink (this silicon group may be hereinafter referred to as a "reactive silicon group").

### Background Art

An organic polymer having a reactive silicon group is known to undergo crosslinking to give a rubber-like cured product even at room temperature. The crosslinking results from siloxane bond formation associated with processes such as a hydrolysis reaction of silyl groups which occurs due to moisture or any other cause. Such reactive silicon group-containing organic polymers have been already produced industrially and become widely used in various products such as sealing materials, adhesives, paints, and waterproof materials.

A curable composition containing a reactive silicon group-containing organic polymer usually contains a curing catalyst (also referred to as a silanol condensation catalyst) such as an organotin compound which has a carbon-tin bond and a typical example of which is dibutyltin bis(acetylacetonate). The purpose of the curing catalyst is to quickly complete the curing reaction of the curable composition. However, the use of organotin compounds requires attention in terms of environmental safety.

Against this background, curing catalysts other than organotin compounds have been investigated. Patent Literature 1 describes using a combination of a titanium compound such as a titanium alkoxide or titanium chelate compound and an amine compound such as DBU (1,8-diazabicyclo[5.4.0]undec-7-ene) as a curing catalyst for a reactive silicon group-containing organic polymer. Paragraph [0220] of this literature teaches that the titanium compound and the amine compound are individually added to the reactive silicon group-containing organic polymer and then the organic polymer and the added compounds are mixed all together.

Patent Literature 2 describes using a combination of a titanium alkoxide and an ammonium hydroxide as a curing catalyst. Paragraph [0070] of this literature also teaches that a composition is prepared by blending and kneading the components all together.

Meanwhile, it is known that when a curable composition containing a reactive silicon group-containing organic polymer is blended with a low-molecular-weight silane compound having a hydrolyzable silicon group and a reactive group such as an amino group or a vinyl group (this compound is a so-called "silane coupling agent"), the resulting blend exhibits enhanced adhesion to various adherends and has improved storage stability.

### Citation List

### Patent Literature

PTL 1: Japanese Laid-Open Patent Application Publication No. 2014-114434
PTL 2: WO 2021/106942 A1

### Summary of Invention

### Technical Problem

A curable composition in which a curing catalyst as disclosed in Patent Literature 1 or 2 which contains a titanium compound and an amine compound is used in combination with an amino group-containing low-molecular-weight silane compound tends to have reduced curability, and curing of the composition tends to require a lot of time.

A possible approach to avoiding such a reduction in curability might be to decrease the amount of the amino group-containing silane compound; however, decreasing the amount of the amino group-containing silane compound results in a lack of the physical property (such as adhesion) to be achieved by the use of the amino group-containing silane compound.

Thus, it is desirable to improve the curability without decreasing the amount of the amino group-containing silane compound.

In view of the above circumstances, the present invention aims to provide a method for producing a curable composition containing a reactive silicon group-containing organic polymer, a curing catalyst including a titanium compound and an amine compound, and an amino group-containing silane compound, the method being adapted to allow the curable composition to have improved curability.

### Solution to Problem

As a result of intensive studies with the goal of solving the above problem, the present inventors have found that the curability of a curable composition containing a reactive silicon group-containing organic polymer, a titanium compound, an amine compound, and an amino group-containing silane compound can be improved by first mixing the reactive silicon group-containing organic polymer, the titanium compound, and the amine compound and then adding and mixing the amino group-containing silane compound with the mixture of the reactive silicon group-containing organic polymer, the titanium compound, and the amine compound, instead of adding the titanium compound, the amine compound, and the amino group-containing silane compound individually to the reactive silicon group-containing organic polymer and then mixing the organic polymer and the added compounds all together. Based on this finding, the inventors have completed the present invention.

Specifically, the present invention relates to a method for producing a curable composition containing an organic polymer (A), a curing catalyst (B), and a silane compound (C), wherein
the organic polymer (A) has a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the silane compound (C) has a hydrolyzable silicon group and an amino group and has a molecular weight of 100 to 1500,
the curing catalyst (B) includes an amidine structure-containing compound (ble) or an ammonium hydroxide compound (b1f), and a titanium compound or condensation product thereof (b2),
the amidine structure-containing compound (b1e) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the ammonium hydroxide compound (b1f) is represented by the following formula (3): 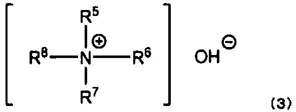 , wherein R⁵, R⁶, R⁷, and R⁸ are the same or different and are each a substituted or unsubstituted hydrocarbon group having 1 to 10 carbon atoms,
the titanium compound (b2) is represented by the following formula (4): Ti(OR⁹)_{d}Y_{4-d} (4), wherein R⁹ is a substituted or unsubstituted hydrocarbon group having 1 to 20 carbon atoms, Y is a chelate coordination compound, and d is 0 or an integer from 1 to 4, and
the method includes mixing the organic polymer (A) and the curing catalyst (B) to obtain an intermediate mixture, and then mixing the intermediate mixture and the silane compound (C).

### Advantageous Effects of Invention

The present invention can provide a method for producing a curable composition containing a reactive silicon group-containing organic polymer, a curing catalyst including a titanium compound and an amine compound, and an amino group-containing silane compound, the method being adapted to allow the curable composition to have improved curability.

According to a preferred aspect of the present invention, a curable composition that exhibits good curability can be obtained without decreasing the amount of the amino group-containing silane compound. Since the amino group-containing silane compound can be used in a larger amount than ever before, the curable composition can have both good curability and a desired level of the physical property (such as adhesion) to be achieved by the use of the amino group-containing silane compound.

One aspect of the present invention can provide a curable composition that exhibits good storage stability with little delay of curing or increase in viscosity caused by storage.

One aspect of the present invention can also provide a curable composition having good adhesion.

Furthermore, one aspect of the present invention can provide a curable composition that cures into a cured product that suffers little from bleeding out of any component on its surface.

Furthermore, one aspect of the present invention can provide a curable composition that cures into a cured product that exhibits good tensile properties.

### Description of Embodiments

Hereinafter, an embodiment of the present invention will be described in detail.

### (Reactive Silicon Group-Containing Organic Polymer (A))

The reactive silicon group-containing organic polymer (A) has a polymer backbone (also referred to as a main chain structure) and polymer chain ends bonded to the polymer backbone. The polymer backbone is a structure made up of a series of monomer units derived from monomers bonded to one another through polymerization or condensation. The monomers bonded to one another may be of the same type or include different types of monomers.

The polymer chain ends are sites located at the ends of the reactive silicon group-containing organic polymer (A). The number of the polymer chain ends of the reactive silicon group-containing organic polymer (A) is two when the whole polymer backbone is linear and three or more when the whole polymer backbone is branched. When the polymer backbone is a mixture of a linear backbone and a branched backbone, the number of the polymer chain ends can be between two and three on average.

The reactive silicon group of the organic polymer (A) can be located in the polymer backbone and/or at the polymer chain ends. Two or more reactive silicon groups may be located at one polymer chain end. In the case where the curable composition according to the present disclosure is used in an adhesive, a sealing material, an elastic coating agent, a pressure-sensitive adhesive or the like, the reactive silicon group is preferably located at the polymer chain ends of the organic polymer (A).

The organic polymer (A) has a reactive silicon group represented by the following formula (1).

-SiR¹₃₋ₐXₐ (1)

In this formula, R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different.

Examples of R¹ in the formula (1) include: alkyl groups such as methyl and ethyl groups; alkyl groups having a heteroatom-containing group, such as chloromethyl, methoxymethyl, and 3,3,3-trifluoropropyl groups; cycloalkyl groups such as a cyclohexyl group; aryl groups such as a phenyl group; aralkyl groups such as a benzyl group; and triorganosiloxy groups represented by R⁰₃SiO- wherein R⁰ is a methyl or phenyl group. Alkyl groups or alkyl groups having a heteroatom-containing group are preferred. More preferred are methyl, ethyl, chloromethyl, and methoxymethyl groups. Even more preferred are methyl and ethyl groups. Particularly preferred is a methyl group. When there are a plurality of R¹ groups, they may be the same or different.

X in the formula (1) is a hydroxy group or a hydrolyzable group. The hydrolyzable group is not limited to a particular type and may be any known hydrolyzable group. Examples of the hydrolyzable group include a hydrogen atom, halogen atoms, and alkoxy, acyloxy, ketoximate, amino, amide, acid amide, aminooxy, mercapto, and alkenyloxy groups. Among these, alkoxy, acyloxy, ketoximate, and alkenyloxy groups are preferred. Alkoxy groups are more preferred in terms of moderate hydrolyzability and ease of handling. Methoxy and ethoxy groups are more preferred. Particularly preferred is a methoxy group. When there are a plurality of X groups, they may be the same or different.

The integer a is 1, 2, or 3. The integer a is preferably 2 or 3. In terms of further improvement in curability, a is particularly preferably 3.

Examples of the reactive silicon group represented by the formula (1) include, but are not limited to, trimethoxysilyl, triethoxysilyl, tris(2-propenyloxy)silyl, triacetoxysilyl, dimethoxymethylsilyl, diethoxymethylsilyl, dimethoxyethylsilyl, dimethoxyphenylsilyl, (chloromethyl)dimethoxysilyl, (chloromethyl)diethoxysilyl, (methoxymethyl)dimethoxysilyl, (methoxymethyl)diethoxysilyl, *(N,N-diethylaminomethyl)dimethoxysilyl,* and (N,N-diethylaminomethyl)diethoxysilyl groups. Among these, dimethoxymethylsilyl and trimethoxysilyl groups are preferred in terms of easy synthesis. Trimethoxysilyl and methoxymethyldimethoxysilyl groups are preferred in terms of achieving high curability. Trimethoxysilyl and triethoxysilyl groups are preferred in terms of obtaining a cured product that exhibits a high recovery rate or a low water absorption rate.

### (Main Chain Structure of Reactive Silicon Group-Containing Organic Polymer (A))

The main chain structure (also referred to as the polymer backbone) of the reactive silicon group-containing organic polymer (A) is not limited to a particular type, and any of various main chain structures can be used. Specific examples of the main chain structure include: polyoxyalkylene polymers such as polyoxyethylene, polyoxypropylene, polyoxybutylene, polyoxytetramethylene, polyoxyethylene-polyoxypropylene copolymer, and polyoxypropylene-polyoxybutylene copolymer; hydrocarbon polymers such as ethylene-propylene copolymer, polyisobutylene, copolymer of isobutylene and isoprene, and hydrogenated polyolefin polymers obtained by hydrogenation of the mentioned polyolefin polymers; polyester polymers obtained by condensation of a dibasic acid such as adipic acid and a glycol or ring-opening polymerization of a lactone; (meth)acrylic ester polymers obtained by radical polymerization of a (meth)acrylic ester monomer such as methyl (meth)acrylate, ethyl (meth)acrylate, butyl (meth)acrylate, 2-ethylhexyl (meth)acrylate, or stearyl (meth)acrylate; vinyl copolymers obtained by radical polymerization of a monomer such as a (meth)acrylic ester monomer, vinyl acetate, acrylonitrile, or styrene; polysulfide polymers; polyamide polymers; polycarbonate polymers; and diallyl phthalate polymers. The term "(meth)acryl" as used above means "acryl and/or methacryl".

Among the polymers mentioned above, saturated hydrocarbon polymers such as polyisobutylene, hydrogenated polyisoprene, and hydrogenated polybutadiene, polyoxyalkylene polymers, and (meth)acrylic ester polymers are preferred since they have a relatively low glass transition temperature and their use can give a cured product having high cold resistance. One of these polymers may be used alone, or two or more thereof may be used in combination.

Polyoxyalkylene polymers and (meth)acrylic ester polymers are particularly preferred since they have high moisture permeability and their use allows the curable composition prepared as a one-part curable composition to exhibit high depth curability and high adhesion. Polyoxyalkylene polymers are more preferred and polyoxypropylene is even more preferred.

(Meth)acrylic ester polymers are advantageous since their monomer composition can be changed in various combinations to provide benefits such as improving adhesion, heat resistance, or weathering resistance and reducing the water absorbency of the cured product obtained by curing the curable composition.

A polyoxyalkylene polymer is preferred which has a repeating unit represented by -R-O- wherein R is a linear or branched alkylene group having 1 to 14 carbon atoms. R is more preferably a linear or branched alkylene group having 2 to 4 carbon atoms. Specific examples of the repeating unit represented by -R-O- include -CH₂O-, -CH₂CH₂O-, -CH₂CH(CH₃)O-, -CH₂CH(C₂H₅)O-, -CH₂C(CH₃)(CH₃)O-, and -CH₂CH₂CH₂CH₂O-. The main chain structure of the polyoxyalkylene polymer may be made up of only one type of repeating units or two or more types of repeating units.

In particular, in the case where the curable composition according to the present disclosure is used in a sealant, an adhesive, or the like, a polyoxypropylene polymer in which oxypropylene repeating units constitute 50 wt% or more, more preferably 80 wt% or more, of the polymer main chain structure is preferred since such a polyoxypropylene polymer is amorphous and has a relatively low viscosity.

The main chain structure of the polyoxyalkylene polymer may be linear or branched. When the main chain structure is branched, the number of branches is preferably from 1 to 6 (this means that the number of terminal hydroxy groups is from 3 to 8), more preferably from 1 to 4 (this means that the number of terminal hydroxy groups is from 3 to 6), and most preferably 1 (this means that the number of terminal hydroxy groups is 3). Having a branched main chain structure, the polyoxyalkylene polymer can provide an enhancing effect on the recovery performance of the cured product. In addition, the polyoxyalkylene polymer can be expected to have a reducing effect on the water absorbency of the cured product. When the main chain structure is branched and the reactive silicon group is a trimethoxysilyl group, a cured product that exhibits a particularly low water absorption rate can be obtained.

The polyoxyalkylene polymer is preferably a polymer obtained by subjecting a cyclic ether compound to a ring-opening polymerization reaction using a polymerization catalyst in the presence of an initiator.

Examples of the cyclic ether compound include ethylene oxide, propylene oxide, butylene oxide, tetramethylene oxide, and tetrahydrofuran. One of these cyclic ether compounds may be used alone, or two or more thereof may be used in combination. Among these cyclic ether compounds, propylene oxide is particularly preferred since with the use of propylene oxide, a polyether polymer that is amorphous and has a relatively low viscosity can be obtained.

Specific examples of the initiator include: alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, and sorbitol; and hydroxy-terminated polyoxyalkylene polymers such as polyoxypropylene diol, polyoxypropylene triol, polyoxyethylene diol, and polyoxyethylene triol which have a number-average molecular weight of 300 to 4,000.

Examples of methods for polyoxyalkylene polymer synthesis include, but are not limited to: a polymerization method using an alkali catalyst such as KOH; a polymerization method taught in Japanese Laid-Open Patent Application Publication No. S61-215623, which uses a transition metal compound-porphyrin complex catalyst such as a complex obtained by a reaction of an organoaluminum compound and porphyrin; a polymerization method taught in Japanese Examined Patent Application Publication No. S46-27250, Japanese Examined Patent Application Publication No. S59-15336, U.S. Patent No. 3278457, U.S. Patent No. 3278458, U.S. Patent No. 3278459, U.S. Patent No. 3427256, U.S. Patent No. 3427334, or U.S. Patent No. 3427335, which uses a double metal cyanide complex catalyst; a polymerization method illustrated in Japanese Laid-Open Patent Application Publication No. H10-273512, which uses a catalyst made of a polyphosphazene salt; and a polymerization method illustrated in Japanese Laid-Open Patent Application Publication No. H11-060722, which uses a catalyst made of a phosphazene compound. The polymerization method using a double metal cyanide complex catalyst is more preferred, for example, in terms of production cost or in order to obtain a polymer having a narrow molecular weight distribution.

The reactive silicon group-containing organic polymer (A) may be a polyoxyalkylene polymer whose main chain structure contains other bonds such as urethane bonds or urea bonds to the extent that the effect of the invention is not significantly diminished. Specific examples of such a polymer include polyurethane prepolymer.

The polyurethane prepolymer can be obtained by a known method, an example of which is a reaction of a polyol compound and a polyisocyanate compound.

Specific examples of the polyol compound include polyether polyol, polyester polyol, polycarbonate polyol, and polyether polyester polyol.

Specific examples of the polyisocyanate compound include diphenylmethane diisocyanate, tolylene diisocyanate, xylylene diisocyanate, methylene-bis(cyclohexyl isocyanate), isophorone diisocyanate, and hexamethylene diisocyanate.

The polyurethane prepolymer may be terminated either by hydroxy groups or isocyanate groups.

In order to obtain a curable composition having high storage stability or high workability, the reactive silicon group-containing organic polymer (A) is particularly preferably a polyoxyalkylene polymer whose main chain structure does not contain urethane bonds, urea bonds, ester bonds, or amide bonds.

Preferably, the reactive silicon group-containing organic polymer (A) is obtained by introducing reactive silicon groups into a polymer using any of the following methods (a) to (d).
(a) A method in which terminal hydroxy groups of a hydroxy-terminated organic polymer are converted to unsaturated carbon-carbon bond groups and then the unsaturated carbon-carbon bond groups are reacted with HSiR¹₃₋ₐXₐ (R¹, X, and a are as defined in the formula (1)).
(b) A method in which terminal hydroxy groups of a hydroxy-terminated organic polymer are reacted with an isocyanate group-containing silane compound represented by OCN-W-SiR¹₃₋ₐXₐ (W is a divalent organic group, and R¹, X, and a are as defined in the formula (1)).
(c) A method in which terminal hydroxy groups of a hydroxy-terminated organic polymer are converted to unsaturated carbon-carbon bond groups and then the unsaturated carbon-carbon bond groups are reacted with a mercapto group-containing silane compound represented by HS-W-SiR¹₃₋ₐXₐ (W is a divalent organic group, and R¹, X, and a are as defined in the formula (1)).
(d) A method in which a hydroxy-terminated organic polymer is reacted with a polyisocyanate compound to synthesize an NCO-terminated organic polymer and then the NCO-terminated organic polymer is reacted with a silane compound represented by HNR-W-SiR¹₃₋ₐXₐ (W is a divalent organic group, R is hydrogen or an alkyl group, and R¹, X, and a are as defined in the formula (1)) or HS-W-SiR¹₃₋ₐXₐ (W is a divalent organic group, and R¹, X, and a are as defined in the formula (1)).

Examples of the terminal unsaturated carbon-carbon bond groups in the methods (a) and (c) include vinyl, allyl, methallyl, allenyl, and propargyl groups.

The reactive silicon group-containing organic polymer (A) is preferably obtained by any one of the above methods using a silane compound represented by a corresponding one of the above formulae wherein W is a methylene group, because in this case the reactive silicon group-containing organic polymer (A) obtained exhibits very high curability.

The method (a) is preferred because it tends to give the reactive silicon group-containing organic polymer (A) having good storage stability. The methods (b), (c), and (d) are preferred because they can achieve a high conversion percentage in a relatively short reaction time.

Examples of reactive silicon group introduction by the method (a) include: reactive silicon group introduction proposed in publications such as Japanese Examined Patent Application Publication No. S45-36319, Japanese Examined Patent Application Publication No. S46-12154, Japanese Laid-Open Patent Application Publication No. S50-156599, Japanese Laid-Open Patent Application Publication No. S54-6096, Japanese Laid-Open Patent Application Publication No. S55-13767, Japanese Laid-Open Patent Application Publication No. S55-13468, Japanese Laid-Open Patent Application Publication No. S57-164123, Japanese Examined Patent Application Publication No. H3-2450, U.S. Patent No. 3632557, U.S. Patent No. 4345053, U.S. Patent No. 4366307, and U.S. Patent No. 4960844; reactive silicon group introduction proposed in publications such as Japanese Laid-Open Patent Application Publication No. S61-197631, Japanese Laid-Open Patent Application Publication No. S61-215622, Japanese Laid-Open Patent Application Publication No. S61-215623, and Japanese Laid-Open Patent Application Publication No. S61-218632, in which reactive silicon groups are introduced by hydrosilylation or the like into a polyoxypropylene polymer having a high molecular weight and a narrow molecular weight distribution, in particular a polyoxypropylene polymer having a number-average molecular weight of 6,000 or more and a dispersity Mw/Mn of 1.6 or less; and reactive silicon group introduction proposed in Japanese Laid-Open Patent Application Publication No. H3-72527.

The dispersity (Mw/Mn) of the reactive silicon group-containing organic polymer (A) is not limited to a particular range but preferably 1.6 or less, more preferably 1.5 or less, and particularly preferably 1.4 or less. The dispersity is preferably 1.2 or less in order to improve various mechanical properties such as the durability and elongation of the cured product.

The number-average molecular weight of the reactive silicon group-containing organic polymer (A), as expressed as a polystyrene-equivalent molecular weight determined by GPC analysis, is preferably from 3,000 to 100,000, more preferably from 5,000 to 50,000, and particularly preferably from 8,000 to 35,000. When the number-average molecular weight is in such a range, the cured product can have excellent mechanical properties. In addition, the amount of reactive silicon groups to be introduced is moderate, and this makes it possible to obtain the organic polymer (A) that exhibits good curability and that has a viscosity suitable for handling and high workability while controlling the production cost in a desired range.

The molecular weight of the reactive silicon group-containing organic polymer (A) can be expressed also as an end group-equivalent molecular weight, which is determined by directly measuring the end group concentration through titration analysis based on the principles of the hydroxy value measurement method as specified in JIS K 1557 and the iodine value measurement method as specified in JIS K 0070 and by making a calculation taking into account the architecture of the organic polymer (the degree of branching which depends on the polymerization initiator used). The end group-equivalent molecular weight of the organic polymer (A) can be determined also by creating a calibration curve representing the relationship between the number-average molecular weight of the polymer precursor as determined by ordinary GPC analysis and the end group-equivalent molecular weight, determining the number-average molecular weight of the organic polymer (A) by GPC analysis, and converting the determined number-average molecular weight to the end group-equivalent molecular weight based on the calibration curve.

To obtain a desired rubber-like cured product, the reactive silicon groups of the organic polymer (A) are preferably located at the polymer chain ends. To allow the organic polymer (A) to have good curability and exhibit a rubber elastic behavior, the number of the reactive silicon groups is preferably 0.5 or more, more preferably 0.6 or more, even more preferably 0.7 or more, and particularly preferably 0.8 or more on average per polymer chain end of the organic polymer (A).

The number of the polymer chain ends per molecule of the organic polymer (A) is preferably from 2 to 8, more preferably from 2 to 4, and particularly preferably 2 or 3.

The number of the reactive silicon groups per molecule of the organic polymer (A) is preferably from 1 to 7, more preferably from 1 to 3.4, and particularly preferably from 1 to 2.6 on average.

When the reactive silicon group-containing organic polymer (A) is branched, the reactive silicon groups may be located at the ends of the main chain of the organic polymer, at the ends of the side chains (branches) of the organic polymer, or at the ends of both the main and side chains. In particular, it is preferable for the reactive silicon groups to be at the ends of the main chain because in this case the molecular weight between crosslinks is increased and thus a rubber-like cured product that exhibits high strength, high elongation, and low elastic modulus is likely to be obtained.

As described in WO 2013/180203 A1, the organic polymer (A) has two or more reactive silicon groups at each polymer chain end when obtained by the method (a) or (c) using an organic polymer having two or more unsaturated carbon-carbon bonds at each polymer chain end. Such an organic polymer (A) exhibits high curability, and the use of this organic polymer (A) is expected to result in a cured product having high strength and high recovery performance.

Specific examples of commercially-available products corresponding to the reactive silicon group-containing organic polymer (A) include: reactive silicon group-containing polyoxypropylene products manufactured by Kaneka Corporation under the trade name Kaneka MS Polymer or Kaneka Silyl; reactive silicon group-containing poly(meth)acrylic esters manufactured by Kaneka Corporation under the trade name Kaneka TA Polymer or Kaneka XMAP; and reactive silicon group-containing polyisobutylene manufactured by Kaneka Corporation under the trade name Kaneka EPION.

### (Curing Catalyst (B))

The curable composition according to the present disclosure contains a curing catalyst (B) used for hydrolyzing and condensing the reactive silicon groups of the organic polymer (A) to form a cured product.

The curing catalyst (B) includes an amidine structure-containing compound (ble) or an ammonium hydroxide compound (b1f), and a titanium compound or condensation product thereof (b2). In the curing catalyst (B), the component (ble) or (b1f) and the component (b2) may exist independently of each other. The curing catalyst (B) may be a mixture or composite of the two components.

### (Amidine Structure-Containing Compound (ble))

The amidine structure-containing compound (b1e) can be represented by the following formula (2).

R²N=CR³-NR⁴₂ (2)

In this formula, R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure.

In order to enhance the curability of the curable composition, R² is preferably a hydrogen atom or a hydrocarbon group having 1 to 20 carbon atoms and more preferably a hydrocarbon group in which the carbon atom (carbon atom at the α-position) adjacent to the nitrogen atom has no unsaturated bond. In terms of easy availability, the number of carbon atoms in R² is preferably from 1 to 10 and more preferably from 1 to 6.

In order to enhance the curability of the curable composition, R³ is preferably a hydrogen atom or an organic group represented by -NR¹⁰₂ and more preferably an organic group represented by -NR¹⁰₂. The two R¹⁰ groups are each independently a hydrogen atom or an organic group having 1 to 20 carbon atoms. In this case, the compound represented by the formula (2) is called a guanidine compound.

In order for the resulting cured product to have good physical properties, R³ is preferably an organic group represented by -NR¹¹-C(=NR¹²)-NR¹³₂ or -N=C(NR¹⁴₂)-NR¹⁵₂. R¹¹, R¹², and the two R¹³ groups are each independently a hydrogen atom or an organic group having 1 to 6 carbon atoms. The two R¹⁴ groups and the two R¹⁵ groups are each independently a hydrogen atom or an organic group having 1 to 6 carbon atoms. In this case, the compound represented by the formula (2) is called a biguanide compound.

In terms of easy availability and in order to enhance the curability of the curable composition, each of the two R⁴ groups in the formula (2) is preferably a hydrogen atom or a hydrocarbon group having 1 to 20 carbon atoms and more preferably a hydrogen atom or a hydrocarbon group having 1 to 10 carbon atoms.

The number of carbon atoms in the amidine structure-containing compound is preferably 2 or more, more preferably 6 or more, and particularly preferably 7 or more. The upper limit of the number of carbon atoms is not limited to a particular value, but the number of carbon atoms is preferably up to 10,000.

The molecular weight of the amidine structure-containing compound is preferably 60 or more, more preferably 120 or more, and particularly preferably 130 or more. The upper limit of the molecular weight is not limited to a particular value, but the molecular weight is preferably up to 100,000.

Examples of the amidine structure-containing compound (ble) include, but are not limited to: pyrimidine compounds such as pyrimidine, 2-aminopyrimidine, 6-amino-2,4-dimethylpyrimidine, 2-amino-4,6-dimethylpyrimidine, 1,4,5,6-tetrahydropyrimidine, 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 2-hydroxy-4,6-dimethylpyrimidine, 1,3-diazanaphthalene, and 2-hydroxy-4-aminopyrimidine;
imidazoline compounds such as 2-imidazoline, 2-methyl-2-imidazoline, 2-ethyl-2-imidazoline, 2-propyl-2-imidazoline, 2-vinyl-2-imidazoline, 1-(2-hydroxyethyl)-2-methyl-2-imidazoline, 1,3-dimethyl-2-iminoimidazolidine, and 1-methyl-2-iminoimidazolidin-4-one;
amidine compounds such as 1,8-diazabicyclo[5.4.0]undec-7-ene (DBU), 1,5-diazabicyclo[4.3.0]non-5-ene (DBN), 2,9-diazabicyclo[4.3.0]nona-1,3,5,7-tetraene, and 6-(dibutylamino)-1,8-diazabicyclo[5,4,0]undec-7-ene (DBA-DBU);
guanidine compounds such as guanidine, dicyandiamide, 1-methylguanidine, 1-ethylguanidine, 1-cyclohexylguanidine, 1-phenylguanidine, 1-(o-tolyl)guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, and 7-*n*-octyl-1,5,7-triazabicyclo[4.4.0]dec-5-ene; and
biguanide compounds such as biguanide, 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-*n*-butyl-N2-ethylbiguanide, 1,1'-ethylenebisbiguanide, 1,5-ethylenebiguanide, 1-[3-(diethylamino)propyl]biguanide, 1-[3-(dibutylamino)propyl]biguanide, and *N'*,*N"*-dihexyl-3,12-diimino-2,4,11,13-tetraazatetradecanediamidine.

One amidine structure-containing compound (b1e) may be used alone, or two or more amidine structure-containing compounds (b1e) may be used in combination.

In order to further improve the curability, the amidine structure-containing compound (ble) is preferably an amidine compound or a guanidine compound, more preferably DBU, DBA-DBU, DBN, or phenylguanidine, even more preferably DBU, DBA-DBU, or DBN, and particularly preferably DBU or DBN.

### (Ammonium Hydroxide Compound (b1f))

The ammonium hydroxide compound (b1f) can be represented by the following formula (3).

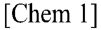

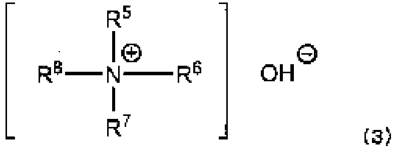

In this formula, R⁵, R⁶, R⁷, and R⁸ are the same or different and are each a substituted or unsubstituted hydrocarbon group having 1 to 10 carbon atoms.

R⁵, R⁶, R⁷, and R⁸ are bonded to the nitrogen atom in the formula (3).

The substituted or unsubstituted hydrocarbon group represented by R⁵, R⁶, R⁷, or R⁸ is preferably a substituted or unsubstituted aliphatic or aromatic hydrocarbon group and more preferably a substituted or unsubstituted aliphatic hydrocarbon group. The aliphatic hydrocarbon group is preferably a linear or branched alkyl group. The number of carbon atoms in the hydrocarbon group is preferably from 1 to 8, more preferably from 1 to 6, and even more preferably from 1 to 4.

Examples of the aliphatic hydrocarbon group include: saturated hydrocarbon groups such as methyl, ethyl, propyl, isopropyl, butyl, isobutyl, pentyl, hexyl, cyclohexyl, heptyl, and octyl groups; and unsaturated hydrocarbon groups such as vinyl, allyl, prenyl, crotyl, and cyclopentadienyl groups. Methyl, ethyl, and butyl groups are preferred.

Examples of the aromatic hydrocarbon group include phenyl, tolyl, and benzyl groups.

Examples of substituents with which the hydrocarbon group may be substituted include methoxy, ethoxy, hydroxy, and acetoxy groups. Examples of the substituted hydrocarbon group include: alkoxyalkyl groups such as methoxymethyl, methoxyethyl, ethoxymethyl, and ethoxyethyl groups; hydroxyalkyl groups such as hydroxymethyl, hydroxyethyl, and 3-hydroxypropyl groups; and an 2-acetoxyethyl group.

Specific examples of the ammonium hydroxide represented by the formula (3) include: tetraalkylammonium hydroxides such as tetramethylammonium hydroxide, tetraethylammonium hydroxide, tetrapropylammonium hydroxide, and tetrabutylammonium hydroxide; trimethylbenzylammonium hydroxide; benzyltriethylammonium hydroxide; trimethylphenylammonium hydroxide; and tris(2-hydroxyethyl)methylammonium hydroxide. In particular, tetraalkylammonium hydroxides are preferred and tetrabutylammonium hydroxide is more preferred. One ammonium hydroxide may be used alone or two or more ammonium hydroxides may be used in combination.

### (Titanium Compound or Condensation Product Thereof (b2))

The titanium compound (b2) is represented by the following formula (4).

Ti(OR⁹)_{d}Y_{4-d} (4)

In this formula, R⁹ is a substituted or unsubstituted hydrocarbon group having 1 to 20 carbon atoms, Y is a chelate coordination compound, and d is 0 or an integer from 1 to 4.

A condensation product of the titanium compound represented by the formula (4) can also be used as the component (b2). The condensation product can be obtained by adding and reacting water with the titanium compound. In order to further improve the curability, the component (b2) is preferably the condensation product of the titanium compound. The titanium compound and the condensation product of the titanium compound may be used in combination.

The substituted or unsubstituted hydrocarbon group represented by R⁹ is preferably a substituted or unsubstituted aliphatic or aromatic hydrocarbon group and more preferably a substituted or unsubstituted aliphatic hydrocarbon group. The aliphatic hydrocarbon group is, for example, a saturated or unsaturated hydrocarbon group. The saturated hydrocarbon group is preferably a linear or branched alkyl group. The number of carbon atoms in the hydrocarbon group is preferably from 1 to 10, more preferably from 1 to 6, and even more preferably from 1 to 4.

Examples of the hydrocarbon group represented by R⁹ include methyl, ethyl, propyl, isopropyl, butyl, isobutyl, sec-butyl, *tert-*butyl*,* pentyl, hexyl, heptyl, octyl, 2-ethylhexyl, nonyl, and decyl groups. Examples of substituents with which the hydrocarbon group may be substituted include methoxy, ethoxy, hydroxy, and acetoxy groups. When there are a plurality of R⁹ groups, they may be the same or different.

The chelate coordination compound represented by Y may be any known compound that can be coordinated to titanium. Examples of the chelate coordination compound include, but are not limited to: diketones such as 2,4-pentanedione, 2,4-hexanedione, 2,4-pentadecanedione, 2,2,6,6-tetramethyl-3,5-heptanedione, 1-aryl-1,3-butanediones such as 1-phenyl-1,3-butanedione and 1-(4-methoxyphenyl)-1,3-butanedione, 1,3-diaryl-1,3-propanediones such as 1,3-diphenyl-1,3-propanedione, 1,3-bis(2-pyridyl)-1,3-propanedione, and 1,3-bis(4-methoxyphenyl)-1,3-propanedione, and 3-benzyl-2,4-pentanedione; ketoesters such as methyl acetoacetate, ethyl acetoacetate, butyl acetoacetate, t-butyl acetoacetate, and ethyl 3-oxohexanoate; ketoamides such as N,N-dimethylacetoacetamide, N,N-diethylacetoacetamide, and acetoacetanilide; malonic esters such as dimethyl malonate, diethyl malonate, and diphenyl malonate; and malonamides such as *N,N,N',N'*-tetramethylmalonamide and *N,N,N',N'*-tetraethylmalonamide. Among these, diketones and ketoesters are preferred. When there are a plurality of compounds represented by Y, they may be the same or different.

The letter d is 0 or an integer from 1 to 4. In order for the curable composition according to the present disclosure to exhibit better curability and for the cured product of the composition to exhibit high elongation, d is preferably 0 or an integer from 1 to 3, more preferably an integer from 1 to 3, and particularly preferably 2.

Specific examples of the titanium compound represented by the formula (4) or the condensation product thereof include: tetramethoxytitanium, trimethoxyethoxytitanium, trimethoxyisopropoxytitanium, trimethoxybutoxytitanium, dimethoxydiethoxytitanium, dimethoxydiisopropoxytitanium, dimethoxydibutoxytitanium, methoxytriethoxytitanium, methoxytriisopropoxytitanium, methoxytributoxytitanium, tetraethoxytitanium, triethoxyisopropoxytitanium, triethoxybutoxytitanium, diethoxydiisopropoxytitanium, diethoxydibutoxytitanium, ethoxytriisopropoxytitanium, ethoxytributoxytitanium, tetraisopropoxytitanium, triisopropoxybutoxytitanium, diisopropoxydibutoxytitanium, tetrabutoxytitanium, tetra-*tert*-butoxytitanium, diisopropoxytitanium bis(acetylacetonate), diisopropoxytitanium bis(ethyl acetoacetate), and diisobutoxytitanium bis(ethyl acetoacetate); and titaniumalkoxide condensation products such as tetrabutoxytitanium dimer and tetrabutoxytitanium tetramer. One titanium compound or a condensation product thereof may be used alone, or two or more titanium compounds or condensation products thereof may be used in combination.

In order for the curable composition to have good curability and for the cured product of the composition to exhibit high elongation, the titanium compound represented by the formula (4) is preferably a compound containing the chelate coordination compound represented by Y. Specifically, the titanium compound is particularly preferably diisopropoxytitanium bis(acetylacetonate), diisopropoxytitanium bis(ethyl acetoacetate), or diisobutoxytitanium bis(ethyl acetoacetate).

In the curable composition according to the present disclosure, the amount of the curing catalyst (B) can be chosen as appropriate depending on the desired level of curability. For example, the amount of the curing catalyst (B) may be from about 0.1 to about 20 parts by weight per 100 parts by weight of the reactive silicon group-containing organic polymer (A). The amount of the curing catalyst (B) is preferably from 0.5 to 15 parts by weight, more preferably from 0.75 to 10 parts by weight, and even more preferably from 1 to 8 parts by weight.

The amount of the amidine structure-containing compound (ble) or ammonium hydroxide compound (b1f) in the curable composition according to the present disclosure can be adjusted as appropriate within the range as mentioned above. In order to enhance the preventive effect on bleeding out of the compound (ble) or (b1f), the amount of the compound (ble) or (b1f) is preferably 2 parts by weight or less, more preferably 1 part by weight or less, and even more preferably 0.7 parts by weight or less per 100 parts by weight of the reactive silicon group-containing organic polymer (A). In terms of curability, the amount of the compound (ble) or (b1f) is preferably at least 0.1 parts by weight, more preferably at least 0.3 parts by weight, even more preferably at least 0.4 parts by weight, and particularly preferably at least 0.5 parts by weight.

The proportions of the amidine structure-containing compound (ble) or ammonium hydroxide compound (b1f) and the titanium compound or condensation product thereof (b2) which are used in the curing catalyst (B) can be set as appropriate. The weight ratio (b2)/(ble) or (b2)/(b1f) may be, for example, from about 0.1 to about 20 and is preferably from 0.5 to 15, more preferably from 0.8 to 12, and even more preferably from 1.0 to 10. In order to achieve a particularly good improving effect on the curability, the weight ratio is preferably up to 9, more preferably up to 6, even more preferably up to 5, and particularly preferably up to 4. In order to enhance the preventive effect on bleeding out of the compound (ble) or (b1f), the weight ratio is preferably at least 1.5, more preferably at least 2, and even more preferably at least 2.6.

The curable composition according to the present disclosure may contain a curing catalyst other than the curing catalyst (B). Examples of such a curing catalyst include organotin compounds, metal carboxylates, amine compounds other than the compounds (ble) and (b1f), carboxylic acids, metal alkoxides other than the titanium compound or condensation product thereof (b2), and inorganic acids.

The amount of the curing catalyst other than the curing catalyst (B) is not limited to a particular range and may be set as appropriate. For example, the amount of the other curing catalyst may be from 0 to 10 parts by weight, from 0 to 5 parts by weight, from 0 to 3 parts by weight, or from 0 to 1 parts by weight per 100 parts by weight of the reactive silicon group-containing organic polymer (A). In particular, in terms of environmental safety, the amount of any organotin compound is preferably minimized and is preferably from 0 to 1 parts by weight and more preferably from 0 to 0.1 parts by weight.

### (Amino Group-Containing Silane Compound (C) and Amino Group-Free Silane Compound (D))

The curable composition according to the present disclosure contains a silane compound (C) having a hydrolyzable silicon group and an amino group and having a molecular weight of 100 to 1500. The curable composition may further contain a silane compound (D) having a hydrolyzable silicon group, having no amino group, and having a molecular weight of 100 to 1500. These silane compounds are also called silane coupling agents.

The inclusion of the silane compound (C) can improve the adhesion of the curable composition to various adherends. The further inclusion of the silane compound (D) can further improve the adhesion of the curable composition to various adherends or improve the storage stability of the curable composition.

It has been discovered that in a curable composition that contains a curing catalyst including the amidine structure-containing compound (b1e) or the ammonium hydroxide compound (b1f) and the titanium compound or condensation product thereof (b2) and that further contains the amino group-containing silane compound (C), the amino group-containing silane compound (C) can be a major cause of a reduction in the curability of the curable composition.

However, in the curable composition production method according to the present disclosure, the curability of the resulting curable composition can be improved by first mixing the organic polymer (A) and the curing catalyst (B) and then mixing the amino group-containing silane compound (C) with the mixture of the organic polymer (A) and the curing catalyst (B). Thus, a curable composition that exhibits good curability can be produced without decreasing the amount of the amino group-containing silane compound (C). Since the amino group-containing silane compound (C) can be used in a larger amount than ever before, a curable composition having both good curability and good adhesion can be produced.

The hydrolyzable silicon group of the amino group-containing silane compound (C) or the amino group-free silane compound (D) refers to a silicon atom-containing group having a silicon atom to which a hydrolyzable group is bonded, and can be presented by the formula (1) described above for the reactive silicon group of the organic polymer (A).

Examples of the hydrolyzable group contained in the hydrolyzable silicon group include, but are not limited to, a hydrogen atom, halogen atoms, and alkoxy, aryloxy, alkenyloxy, acyloxy, ketoximate, amino, amide, acid amide, aminooxy, and mercapto groups. Among these, alkoxy groups such as methoxy and ethoxy groups are more preferred in terms of moderate hydrolyzability and ease of handling, and methoxy and ethoxy groups are particularly preferred.

The number of the hydrolyzable groups bonded to the silicon atom in the amino group-containing silane compound (C) or amino group-free silane compound (D) is preferably 3 in some cases in order to ensure good adhesion. In other cases, the number of the hydrolyzable groups is preferably 2 in order to ensure the storage stability of the curable composition.

The molecular weight of the amino group-containing silane compound (C) or amino group-free silane compound (D) is in the range of 100 to 1,500. The molecular weight may be at least 150. The molecular weight may be up to 1,000 or up to 500.

The amino group-containing silane compound (C) is a compound having a hydrolyzable silicon group and a substituted or unsubstituted amino group and may be called an aminosilane. Conventionally, such a compound is used as an adhesion promoter in a curable composition containing a reactive silicon group-containing organic polymer. Examples of the substituent of the substituted amino group include, but are not limited to, alkyl, aralkyl, and aryl groups.

Specific examples of the amino group-containing silane compound (C) include: amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-(2-aminoethyl)aminoethyl)aminopropyltrimethoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, *N*-phenyl-γ-aminopropyltrimethoxysilane, *N*-benzyl-γ-aminopropyltrimethoxysilane, *N*-vinylbenzyl-γ-aminopropyltriethoxysilane, *N*-cyclohexylaminomethyltriethoxysilane, *N*-cyclohexylaminomethyldiethoxymethylsilane, *N*-phenylaminomethyltrimethoxysilane, *N-butylaminopropyltrimethoxysilane,* (2-aminoethyl)aminomethyltrimethoxysilane, *N,N'*-bis[3-(trimethoxysilyl)propyl]ethylenediamine, and bis(trimethoxysilylpropyl)amine; and ketimine-type silanes such as *N-(1,3-dimethylbutylidene)-3-(triethoxysilyl)-1-propaneamine.* A partial hydrolysis-condensation product of any of the above-mentioned amino group-containing silanes or a partial hydrolysis-condensation product of any of the above-mentioned amino group-containing silanes and another alkoxysilane (such as a reaction product of an amino group-containing silane and an epoxy group-containing silane or a reaction product of an amino group-containing silane and a (meth)acrylic group-containing silane) can also be used. One amino group-containing silane compound (C) may be used alone, or two or more amino group-containing silane compounds (C) may be used in combination.

In order to achieve good adhesion, the amino group-containing silane compound (C) is preferably γ-aminopropyltrimethoxysilane, γ-(2-aminoethyl)aminopropyltrimethoxysilane, or γ-(2-aminoethyl)aminopropylmethyldimethoxysilane. A silane coupling agent formed as an oligomer through partial condensation of hydrolyzable silicon groups is suitable for use in terms of safety and stability. One silane coupling agent may be subjected to condensation, or two or more silane coupling agents may be subjected to condensation. Examples of the silane coupling agent formed as an oligomer include Dynasylan 1146 of Evonik. To ensure the storage stability of the curable composition, γ-aminopropyltrimethoxysilane and γ-(2-aminoethyl)aminopropylmethyldimethoxysilane are preferred.

The silane compound (D) having a hydrolyzable silicon group and having no amino group may be a compound having the hydrolyzable silicon group and a reactive group other than amino groups or may be a compound having no reactive group other than the hydrolyzable silicon group.

Specific examples of the amino group-free silane compound (D) include:
epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane;
isocyanate group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, and (isocyanatomethyl)dimethoxymethylsilane;
mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, and mercaptomethyltriethoxysilane;
carboxysilanes such as β-carboxyethyltriethoxysilane, β-carboxyethylphenylbis(2-methoxyethoxy)silane, and *N*-β-(carboxymethyl)aminoethyl-γ-aminopropyltrimethoxysilane;
vinyl-type unsaturated group-containing silanes such as vinyltrimethoxysilane, vinylmethyldimethoxysilane, and vinyltriethoxysilane;
(meth)acrylic-type unsaturated group-containing silanes such as γ-methacryloxypropylmethyldimethoxysilane, γ-methacryloxypropyltrimethoxysilane, γ-acryloxypropylmethyltriethoxysilane, and γ-acryloxypropyltrimethoxysilane;
reactive group-free silanes such as methyltrimethoxysilane, dimethyldimethoxysilane, n-propyltrimethoxysilane, phenyltrimethoxysilane, methylphenyldimethoxysilane, dimethoxydiphenylsilane, hexyltrimethoxysilane, 1,6-bis(trimethoxysilyl)hexane, (methoxymethyl)trimethoxysilane, and*p*-styryltrimethoxysilane;
halogen-containing silanes such as γ-chloropropyltrimethoxysilane; and
isocyanurate silanes such as tris(trimethoxysilyl) isocyanurate.

One amino group-free silane compound (D) may be used alone, or two or more amino group-free silane compounds (D) may be used in combination. A partial hydrolysis-condensation product of any of the above-mentioned silane compounds can also be used. Examples include Dynasylan 6490 and Dynasylan 6498 of Evonik.

In order to achieve good adhesion, the amino group-free silane compound (D) is preferably γ-glycidoxypropyltrimethoxysilane, γ-glycidoxypropyltriethoxysilane, or γ-glycidoxypropylmethyldimethoxysilane.

In order to achieve good storage stability, the amino group-free silane compound (D) is preferably vinyltrimethoxysilane, methyltrimethoxysilane, phenyltrimethoxysilane, or (methoxymethyl)trimethoxysilane, more preferably vinyltrimethoxysilane or (methoxymethyl)trimethoxysilane, and particularly preferably vinyltrimethoxysilane.

The amount of the amino group-containing silane compound (C) is not limited to a particular range and can be set as appropriate depending on the desired level of adhesion. The amount of the amino group-containing silane compound (C) is preferably from 0.1 to 20 parts by weight, more preferably from 0.5 to 10 parts by weight, and even more preferably from 1 to 8 parts by weight per 100 parts by weight of the organic polymer (A).

The improved curability of the curable composition according to the present disclosure is achieved thanks to the order in which the components are mixed. This allows for an increase in the amount of the amino group-containing silane compound (C) which would cause a reduction in curability in conventional curable compositions. From this perspective, the amount of the amino group-containing silane compound (C) is preferably 2 parts by weight or more, more preferably 3 parts by weight or more, and even more preferably 4 parts by weight or more per 100 parts by weight of the organic polymer (A). The amount of the amino group-containing silane compound (C) may be 5 parts by weight or more.

The amount of the amino group-free silane compound (D) is not limited to a particular range either and can be set as appropriate depending on the desired level of the physical property to be achieved by the use of the silane compound (D). The amount of the amino group-free silane compound (D) is preferably from 0 to 20 parts by weight, more preferably from 0.1 to 10 parts by weight, and even more preferably from 1 to 8 parts by weight per 100 parts by weight of the organic polymer (A). In the curable composition according to the present disclosure, the amount of the amino group-free silane compound (D) can also be increased. Specifically, the amount of the silane compound (D) may be 3 parts by weight or more, 4 parts by weight or more, or 5 parts by weight or more per 100 parts by weight of the organic polymer (A).

The total amount of the amino group-containing silane compound (C) and the amino group-free silane compound (D) is preferably from 5 to 20 parts by weight, more preferably from 6 to 15 parts by weight, and even more preferably from 7 to 12 parts by weight per 100 parts by weight of the organic polymer (A).

### (Method for Producing Curable Composition)

The curable composition according to the present disclosure can be produced by mixing the organic polymer (A) and the curing catalyst (B) to obtain an intermediate mixture and then mixing the intermediate mixture and the amino group-containing silane compound (C). This way of production leads to the improved curability of the produced curable composition. It is inferred that in this method, the amidine structure-containing compound (ble) or ammonium hydroxide compound (b1f) and the titanium compound or condensation product thereof (b2) interact with each other before the addition of the amino group-containing silane compound (C) and the interaction provides an improvement in catalytic activity.

In the case of a conventional method in which the components are individually added and then mixed all together, it is thought that the titanium compound or condensation product thereof (b2) interacts with the amino group-containing silane compound (C) and that this interaction hinders the interaction between the titanium compound or condensation product thereof (b2) and the amidine structure-containing compound (ble) or ammonium hydroxide compound (b1f), leading to a decline in catalytic activity.

The mixing of the organic polymer (A) and the curing catalyst (B) or the mixing of the intermediate mixture and the amino group-containing silane compound (C) is not limited to using a particular technique and can be accomplished by means of a conventionally known device with which the components can be homogeneously mixed. The temperature during the mixing is not limited to a particular range and may be a room temperature.

The mixing of the components of the curing catalyst (B) with the organic polymer (A) is not limited to a particular order. The amidine structure-containing compound (ble) or ammonium hydroxide compound (b1f) and the organic polymer (A) may be mixed first, and then the titanium compound or condensation product thereof (b2) may be added and mixed with the mixture of the organic polymer (A) and the component (ble) or (b1f). Alternatively, the component (b2) and the organic polymer (A) may be mixed first, and then the component (ble) or (b1f) may be added and mixed with the mixture of the organic polymer (A) and the component (b2). Alternatively, both the component (ble) or (b1f) and the component (b2) may be added to the organic polymer (A) and then mixed with the organic polymer (A). In order to achieve a particularly good improving effect on the curability, it is preferable to first mix the component (ble) or (b1f) and the component (b2) and add and mix the resulting mixture with the organic polymer (A).

Unlike the amino group-containing silane compound (C), the amino group-free silane compound (D) rarely causes a reduction in curability of the curable composition. Thus, the mixing of the amino group-free silane compound (D) with the other components is not limited to a particular order. The organic polymer (A) and the amino group-free silane compound (D) may be mixed first, and then the curing catalyst (B) may be added and mixed with the mixture of the organic polymer (A) and the amino group-free silane compound (D). Alternatively, the organic polymer (A) and the curing catalyst (B) may be mixed first, and then the amino group-free silane compound (D) may be added and mixed with the mixture of the organic polymer (A) and the curing catalyst (B). The latter mixing order is preferred in order to further improve the curability.

In the case of the latter mixing order, the mixing of the amino group-containing silane compound (C) and the amino group-free silane compound (D) with the other components is not limited to a particular order. The intermediate mixture and the amino group-containing silane compound (C) may be mixed first, and then the amino group-free silane compound (D) may be added and mixed with the mixture of the intermediate mixture and the amino group-containing silane compound (C). Alternatively, the intermediate mixture and the amino group-free silane compound (D) may be mixed first, and then the amino group-containing silane compound (C) may be added and mixed with the mixture of the intermediate mixture and the amino group-free silane compound (D). Alternatively, the amino group-containing silane compound (C) and the amino group-free silane compound (D) may be added individually to the intermediate mixture and then mixed with the intermediate mixture.

In addition, the mixing of additional components described below with the above components is not limited to a particular order either and may be done as with the mixing of the amino group-free silane compound (D) with the other components. Preferably, the organic polymer (A) and the additional components are mixed first, then the mixture is mixed with the curing catalyst (B), and the resulting mixture is further mixed with the amino group-containing silane compound (C).

### (Additional Components)

The curable composition according to the present disclosure can, if necessary, contain a plasticizer, a filler, a property modifier, an anti-sagging agent (thixotropic agent), a stabilizer etc.

The curable composition according to the present disclosure can contain a plasticizer. By the addition of the plasticizer, the following properties can be adjusted: the viscosity and slump resistance of the curable composition; and the mechanical properties such as the tensile strength and elongation of the cured product obtained by curing the curable composition. Specific examples of the plasticizer include: phthalic ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic ester compounds such as bis(2-ethylhexyl)-1,4-benzenedicarboxylate (a specific example is a product manufactured by EASTMAN CHEMICAL under the trade name "EASTMAN 168"); non-phthalic ester compounds such as 1,2-cyclohexanedicarboxylic acid diisononyl ester (a specific example is a product manufactured by BASF under the trade name "Hexamoll DINCH"); aliphatic polycarboxylic ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkylsulfonic phenyl esters (a specific example is a product manufactured by LANXESS under the trade name "Mesamoll"); phosphoric ester compounds such as tricresyl phosphate and tributyl phosphate; trimellitic ester compounds; chlorinated paraffin; hydrocarbon oils such as alkyl diphenyl and partially-hydrogenated terphenyl; process oil; and epoxy plasticizers such as epoxidized soybean oil and benzyl epoxystearate. Among these, aliphatic carboxylic esters such as 1,2-cyclohexanedicarboxylic acid diisononyl ester are preferred since a cured product obtained from the curable composition made with an aliphatic carboxylic ester is likely to have low water absorbency.

A polymeric plasticizer can also be used. The use of the polymeric plasticizer allows for maintenance of initial physical properties over a longer period of time than the use of a low-molecular-weight plasticizer which contains no polymer component in the molecule. In addition, the use of the polymeric plasticizer allows the cured product to exhibit improved drying property (coatability) when an alkyd paint is applied to the cured product. Specific examples of the polymeric plasticizer include, but are not limited to: vinyl polymers obtained by polymerizing a vinyl monomer using any of various methods; polyalkylene glycol esters such as diethylene glycol dibenzoate, triethylene glycol dibenzoate, and pentaerythritol ester; polyester plasticizers obtained from a combination of a dibasic acid such as sebacic acid, adipic acid, azelaic acid, or phthalic acid and a dihydric alcohol such as ethylene glycol, diethylene glycol, triethylene glycol, propylene glycol, or dipropylene glycol; polyethers such as polyether polyols (e.g., polyethylene glycol, polypropylene glycol, and polytetramethylene glycol which have a number-average molecular weight of 500 or more or a number-average molecular weight of 1,000 or more) and derivatives resulting from conversion of the hydroxy groups of the polyether polyols to ester or ether groups; polystyrenes such as polystyrene and poly-α-methylstyrene; polybutadiene; polybutene; polyisobutylene; butadiene-acrylonitrile; and polychloroprene.

Among the above polymeric plasticizers, those compatible with the reactive silicon group-containing organic polymer (A) are preferred. In this respect, polyethers and vinyl polymers are preferred. In addition, the use of a polyether as a plasticizer can improve surface curability and depth curability and prevent post-storage delay of curing. More preferred is polypropylene glycol. In terms of compatibility, weathering resistance, and heat resistance, vinyl polymers are preferred. More preferred vinyl polymers are acrylic polymers and/or methacrylic polymers, and acrylic polymers such as polyalkyl acrylates are even more preferred. The method used to synthesize such a polymer is preferably living radical polymerization and more preferably atom-transfer radical polymerization in order to allow the polymer to have a narrow molecular weight distribution and a low viscosity. It is preferable to use a polymer obtained by a method as described in Japanese Laid-Open Patent Application Publication No. 2001-207157; this method is a so-called SGO process in which an alkyl acrylate monomer is subjected to continuous bulk polymerization at high temperature and high pressure.

The number-average molecular weight of the polymeric plasticizer is preferably from 500 to 15,000, more preferably from 800 to 10,000, even more preferably from 1,000 to 8,000, and particularly preferably from 1,000 to 5,000. Most preferably, the number-average molecular weight of the polymeric plasticizer is from 1,000 to 3,000. If the molecular weight is too low, the plasticizer flows out over time due to heat or rain, and the initial physical properties cannot be maintained over a long period of time. If the molecular weight is too high, this leads to a high viscosity and poor workability.

The polymeric plasticizer is not limited to having a particular molecular weight distribution but preferably has a narrow molecular weight distribution. The dispersity of the polymeric plasticizer is preferably less than 1.80. The dispersity is more preferably 1.70 or less, even more preferably 1.60 or less, still even more preferably 1.50 or less, particularly preferably 1.40 or less, and most preferably 1.30 or less.

The number-average molecular weight of the polymeric plasticizer is measured by GPC analysis when the polymeric plasticizer is a vinyl polymer and by end group analysis when the polymeric plasticizer is a polyether polymer. The dispersity (Mw/Mn) is measured by GPC analysis (polystyrene equivalent).

The polymeric plasticizer may or may not have reactive silicon groups. When having reactive silicon groups, the polymeric plasticizer acts as a reactive plasticizer and can be prevented from moving out of the cured product. When the polymeric plasticizer has reactive silicon groups, the number of the reactive silicon groups is preferably 1 or less and more preferably 0.8 or less on average per molecule. When a reactive silicon group-containing plasticizer, in particular a reactive silicon group-containing polyether polymer is used, its number-average molecular weight is desirably lower than that of the reactive silicon group-containing organic polymer (A).

The amount of the plasticizer used is preferably from 5 to 150 parts by weight, more preferably from 10 to 120 parts by weight, and even more preferably from 20 to 100 parts by weight per 100 parts by weight of the reactive silicon group-containing organic polymer (A). When the amount of the plasticizer is in such a range, the plasticizer can exhibit the desired effect without sacrificing the mechanical strength of the cured product. One plasticizer may be used alone or two or more plasticizers may be used in combination. A low-molecular-weight plasticizer and a polymeric plasticizer may be used in combination. Plasticizers as described above can be added at the time of polymer production.

The curable composition according to the present disclosure can contain a filler. Examples of the filler include: reinforcing fillers such as fumed silica, precipitated silica, crystalline silica, molten silica, dolomite, silicic anhydride, hydrated silicic acid, and carbon black; fillers such as ground calcium carbonate, colloidal calcium carbonate, magnesium carbonate, diatomite, baked clay, clay, talc, titanium oxide, bentonite, organic bentonite, ferric oxide, aluminum fines, flint powder, zinc oxide, activated zinc oxide, and resin powders such as PVC powder and PMMA powder; and fibrous fillers such as asbestos and glass fibers or filaments. When a filler is used, the amount of the filler is preferably from 1 to 300 parts by weight and more preferably from 10 to 200 parts by weight per 100 parts by weight of the reactive silicon group-containing organic polymer (A).

In the case where the use of a filler is intended to further enhance the strength of the cured product, it is preferable to select the filler mainly from fumed silica, precipitated silica, crystalline silica, molten silica, dolomite, silicic anhydride, hydrated silicic acid, carbon black, surface-treated fine calcium carbonate, baked clay, clay, and activated zinc oxide. The use of the filler can provide a preferred result when the amount of the filler is from 1 to 200 parts by weight per 100 parts by weight of the reactive silicon group-containing organic polymer (A). In the case where it is desired for the cured product to have low strength and high elongation at break, the use of a filler selected mainly from titanium oxide, calcium carbonate, magnesium carbonate, talc, ferric oxide, zinc oxide, and Shirasu balloons can provide a preferred result when the amount of the filler is from 5 to 200 parts by weight per 100 parts by weight of the reactive silicon group-containing organic polymer (A).

The curable composition according to the present disclosure can contain hollow spheres such as balloons for the purpose of reducing the weight (or reducing the specific gravity) of the composition.

Balloons are a spherical filler and hollow. Examples of the material of the balloons include inorganic materials such as glass, Shirasu, and silica and organic materials such as phenol resin, urea resin, polystyrene, saran, and acrylonitrile. The material is not limited to those mentioned; an inorganic material and an organic material may be combined, or layers of different materials may be formed one around the other. Balloons made of an inorganic material, an organic material, or a combination of inorganic and organic materials, may be used. One type of balloons may be used, or two or more types of balloons made of different materials may be used as a mixture. The balloons used may have a processed or coated surface or may have a surface treated with any kind of surface treatment agent. For example, organic balloons may be coated with calcium carbonate, talc, or titanium oxide, or inorganic balloons may be surface-treated with a silane coupling agent.

The particle size of the balloons used is preferably from 3 to 200 µm and particularly preferably from 10 to 110 µm. If the particle size is less than 3 µm, the balloons need to be added in large quantities since each of the balloons has a small effect on weight reduction. If the particle size is more than 200 µm, the cured product produced as a sealing material tends to have a rough surface or have low elongation.

The amount of the hollow spheres used is preferably from 0.01 to 30 parts by weight per 100 parts by weight of the reactive silicon group-containing organic polymer (A). The amount of the hollow spheres is more preferably at least 0.1 parts by weight and up to 20 parts by weight. When the amount of the hollow spheres is in such a range, the use of the hollow spheres can lead to improved workability without sacrificing the elongation or strength at break of the cured product.

The curable composition according to the present disclosure may, if necessary, contain a property modifier for adjusting the tensile properties of the cured product. Examples of the property modifier include, but are not limited to: alkylalkoxysilanes such as methyltrimethoxysilane, dimethyldimethoxysilane, trimethylmethoxysilane, and n-propyltrimethoxysilane; alkylisopropenoxysilanes such as dimethyldiisopropenoxysilane, methyltriisopropenoxysilane, and γ-glycidoxypropylmethyldiisopropenoxysilane; alkoxysilanes having a functional group, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, *N*-β-aminoethyl-γ-aminopropylmethyldimethoxysilane, γ-mercaptopropyltrimethoxysilane, and γ-mercaptopropylmethyldimethoxysilane; silicone vanishes; and polysiloxanes. The use of the property modifier can increase the hardness of the cured product obtained by curing the curable composition or conversely decrease the hardness of the cured product and increase the elongation at break of the cured product. One of the property modifiers as mentioned above may be used alone, or two or more thereof may be used in combination.

In particular, a compound hydrolyzable to form a compound having a monovalent silanol group in the molecule can act to decrease the modulus of the cured product without aggravating the stickiness of the surface of the cured product. Particularly preferred is a compound the hydrolysis of which gives trimethylsilanol. Examples of the compound hydrolyzable to form a compound having a monovalent silanol group in the molecule are compounds as mentioned in Japanese Laid-Open Patent Application Publication No. H5-117521. Other examples include: silicon compounds which are derivatives of alkyl alcohols such as hexanol, octanol, and decanol and which are hydrolyzable to form trialkyl silanols such as trimethylsilanol; and silicon compounds as mentioned in Japanese Laid-Open Patent Application Publication No. H11-241029 which are derivatives of polyhydric alcohols having three or more hydroxy groups such as trimethylolpropane, glycerin, pentaerythritol, and sorbitol and which are hydrolyzable to form trialkyl silanols such as trimethylsilanol. Specific examples of such silicon compounds include phenoxytrimethylsilane and tris((trimethylsiloxy)methyl)propane.

Still other examples include silicon compounds as mentioned in Japanese Laid-Open Patent Application Publication No. H7-258534 which are derivatives of oxyalkylene polymers and hydrolyzable to form trialkyl silanols such as trimethylsilanol. A polymer as mentioned in Japanese Laid-Open Patent Application Publication No. H6-279693, which has a hydrolyzable silicon-containing group capable of crosslinking and a silicon-containing group hydrolyzable to form a monosilanol-containing compound, can also be used.

The property modifier is preferably used in an amount of 0.1 to 20 parts by weight, more preferably in an amount of 0.5 to 10 parts by weight, per 100 parts by weight of the reactive silicon group-containing organic polymer (A).

The curable composition according to the present disclosure may, if necessary, contain an anti-sagging agent in order to prevent sagging and improve workability. Examples of the anti-sagging agent include, but are not limited to, polyamide waxes, hydrogenated castor oil derivatives, and metallic soaps such as calcium stearate, aluminum stearate, and barium stearate. One of these anti-sagging agents may be used alone or two or more thereof may be used in combination.

The anti-sagging agent is preferably used in an amount of 0.1 to 20 parts by weight per 100 parts by weight of the reactive silicon group-containing organic polymer (A).

The curable composition according to the present disclosure can contain an antioxidant (anti-aging agent). The use of the antioxidant can increase the weathering resistance of the cured product. Examples of the antioxidant include hindered phenol antioxidants, monophenol antioxidants, bisphenol antioxidants, and polyphenol antioxidants, and hindered phenol antioxidants are particularly preferred. Examples include: Irganox 245, Irganox 1010, Irganox 1035, Irganox 1076, Irganox 1135, Irganox 1330, and Irganox 1520 (all of which are manufactured by BASF); SONGNOX 1076 (manufactured by SONGWON); and BHT. The following hindered amine light stabilizers can also be used: Tinuvin 622LD, Tinuvin 144, Tinuvin 292, CHIMASSORB 944LD, and CHIMASSORB 119FL (all of which are manufactured by BASF); ADK STAB LA-57, ADK STAB LA-62, ADK STAB LA-67, ADK STAB LA-63, and ADK STAB LA-68 (all of which are manufactured by ADEKA Corporation); Sanol LS-2626, Sanol LS-1114, and Sanol LS-744 (all of which are manufactured by Sankyo Lifetech Co., Ltd.); and Nocrac CD (manufactured by Ouchi Shinko Chemical Industrial Co., Ltd.). Other antioxidants such as SONGNOX 4120, NAUGARD 445, and OKABEST CLX050 can also be used. Specific examples of antioxidants are mentioned also in Japanese Laid-Open Patent Application Publication No. H4-283259 or Japanese Laid-Open Patent Application Publication No. H9-194731.

The amount of the antioxidant used is preferably from 0.1 to 10 parts by weight and more preferably from 0.2 to 5 parts by weight per 100 parts by weight of the reactive silicon group-containing organic polymer (A).

The curable composition according to the present disclosure can contain a light stabilizer. The use of the light stabilizer can prevent photooxidative degradation of the cured product. Examples of the light stabilizer include benzotriazole, hindered amine, and benzoate compounds. Particularly preferred are hindered amine compounds. Specific examples of light stabilizers are mentioned in Japanese Laid-Open Patent Application Publication No. H9-194731.

The amount of the light stabilizer used is preferably from 0.1 to 10 parts by weight and more preferably from 0.2 to 5 parts by weight per 100 parts by weight of the reactive silicon group-containing organic polymer (A).

In the case where a photocurable material is added to the curable composition according to the present disclosure, especially when the photocurable material used is an unsaturated acrylic compound, it is preferable, as taught in Japanese Laid-Open Patent Application Publication No. H5-70531, to use a hindered amine light stabilizer, in particular a tertiary amine-containing hindered amine light stabilizer, in order to improve the storage stability of the composition. Examples of the tertiary amine-containing hindered amine light stabilizer include: Tinuvin 123, Tinuvin 144, Tinuvin 249, Tinuvin 292, Tinuvin 312, Tinuvin 622LD, Tinuvin 765, Tinuvin 770, Tinuvin 880, Tinuvin 5866, Tinuvin B97, CHIMASSORB 119FL, and CHIMASSORB 944LD (all of which are manufactured by BASF); ADK STAB LA-57, LA-62, LA-63, LA-67, and LA-68 (all of which are manufactured by ADEKA Corporation); Sanol LS-292, LS-2626, LS-765, LS-744, and LS-1114 (all of which are manufactured by Sankyo Lifetech Co., Ltd.); SABOSTAB UV91, SABOSTAB UV119, SONGSORB CS5100, SONGSORB CS622, and SONGSORB CS944 (all of which are manufactured by SONGWON); and Nocrac CD (manufactured by Ouchi Shinko Chemical Industrial Co., Ltd.).

The curable composition according to the present disclosure can contain an ultraviolet absorber. The use of the ultraviolet absorber can enhance the surface weathering resistance of the cured product. Examples of the ultraviolet absorber include benzophenone, benzotriazole, salicylate, triazine, substituted acrylonitrile, and metal chelate compounds. Particularly preferred are benzotriazole compounds. Examples include: Tinuvin 234, Tinuvin 326, Tinuvin 327, Tinuvin 328, Tinuvin 329, Tinuvin 350, Tinuvin 571, Tinuvin 900, Tinuvin 928, Tinuvin 1130, and Tinuvin 1600 (all of which are manufactured by BASF); and SONGSORB 3290 (manufactured by SONGWON). Examples of triazine compounds include: Tinuvin 400, Tinuvin 405, Tinuvin 477, and Tinuvin 1577ED (all of which are manufactured by BASF); and SONGSORB CS400 and SONGSORB 1577 (manufactured by SONGWON). Examples of benzophenone compounds include SONGSORB 8100 (manufactured by SONGWON).

The amount of the ultraviolet absorber used is preferably from 0.1 to 10 parts by weight and more preferably from 0.2 to 5 parts by weight per 100 parts by weight of the reactive silicon group-containing organic polymer (A). It is preferable to use a phenol or hindered phenol antioxidant, a hindered amine light stabilizer, and a benzotriazole ultraviolet absorber in combination.

Addworks IBC 760 (manufactured by Clariant) can also be used which is a product combining an antioxidant, a light stabilizer, and an ultraviolet absorber.

The curable composition according to the present disclosure can contain an epoxy resin. The composition containing an added epoxy resin is preferred for use as an adhesive, in particular an adhesive for exterior wall tiles. Examples of the epoxy resin include bisphenol A epoxy resins and novolac epoxy resins.

The proportions of the organic polymer (A) and the epoxy resin are not limited to particular ranges. The organic polymer (A)/epoxy resin weight ratio is preferably from 100/1 to 1/100.

When the curable composition according to the present disclosure contains the epoxy resin, a curing agent for curing the epoxy resin is preferably used with the curable composition. The epoxy resin-curing agent used is not limited to a particular material and may be a commonly used epoxy resin-curing agent. When a curing agent for curing the epoxy resin is used, the amount of the curing agent is preferably from 0.1 to 300 parts by weight per 100 parts by weight of the epoxy resin.

The curable composition according to the present disclosure may, if necessary, contain various additives for the purpose of adjusting the physical properties of the curable composition or cured product. Examples of the additives include a flame retardant, a curability modifier, a radical inhibitor, a metal deactivator, an antiozonant, a phosphorus-based peroxide decomposer, a lubricant, a pigment, a blowing agent, a solvent, and a fungicide. Examples of the flame retardant include aluminum hydroxide and magnesium hydroxide. Each of these additives may be a single material or a combination of two or more types of materials. Specific examples of additives other than those mentioned herein are mentioned in publications such as Japanese Examined Patent Application Publication No. H4-69659, Japanese Examined Patent Application Publication No. H7-108928, Japanese Laid-Open Patent Application Publication No. S63-254149, Japanese Laid-Open Patent Application Publication No. S64-22904, and Japanese Laid-Open Patent Application Publication No. 2001-72854.

The curable composition according to the present disclosure can be prepared as a one-part curable composition all the components of which are blended together and hermetically stored and which, when applied to any object, cures under the action of moisture in the air. The curable composition can be prepared also as a two-part curable composition consisting of a curing agent which is a blend of components such as a curing catalyst, a filler, a plasticizer, and water and a base material which contains the reactive silicon group-containing organic polymer (A). The base material and the curing agent are prepared separately from each other and mixed before use.

In the case where the curable composition is a one-part composition, all the components are blended together beforehand. Thus, it is preferable that a water-containing component be dried to remove water before use or dehydrated by means such as pressure reduction during blending or kneading. In the case where the curable composition is a two-part composition, there is no need to add any curing catalyst to the base material containing the reactive silicon group-containing organic polymer (A), and the composition has a low risk of gelation even if the curing agent blend contains some amount of water; however, the water-containing component is preferably dried or dehydrated when the composition needs to have long-term storage stability. A suitable drying/dehydrating method used when the water-containing component is a solid such as powder is thermal drying, and a suitable drying/dehydrating method used when the water-containing component is a liquid is dehydration under reduced pressure or dehydration using synthetic zeolite, activated alumina, or silica gel. Alternatively, a small amount of isocyanate compound may be added to react the isocyanate group with water and thus accomplish dehydration. The storage stability of the curable composition can be further improved by not only performing the drying/dehydration as described above but also adding a lower alcohol such as methanol or ethanol or an alkoxysilane compound such as methyltrimethoxysilane, n-propyltrimethoxysilane, vinyltrimethoxysilane, vinylmethyldimethoxysilane, phenyltrimethoxysilane, γ-mercaptopropylmethyldimethoxysilane, γ-mercaptopropylmethyldiethoxysilane, or γ-glycidoxypropyltrimethoxysilane. A partially-condensed silane compound such as Dynasylan 6490 of Evonik is suitable for use as a dehydrating agent in terms of safety and stability.

The amount of the dehydrating agent used, in particular a silicon compound such as vinyltrimethoxysilane which is reactive with water, is preferably from 0.1 to 20 parts by weight and more preferably from 0.5 to 10 parts by weight per 100 parts by weight of the reactive silicon group-containing organic polymer (A).

The curable composition according to the present disclosure can be used as an architectural sealing material, an industrial adhesive, a waterproof coating, or a material for a pressure-sensitive adhesive. The curable composition can be used also as a sealing agent for buildings, ships, automobiles, or roads. The curable composition can, alone or with the help of a primer, adhere to a wide variety of substrates such as glass, porcelain, wood, metal, and a resin molded article, and thus can be used as any of various types of sealing compositions and adhesive compositions. The curable composition can be used not only as an ordinary adhesive but also as a contact adhesive. In addition, the curable composition is useful as a food packaging material, a casting rubber material, a mold making material, or a paint.

In the following items, preferred aspects of the present disclosure are listed. The present invention is not limited to the following items.

### [Item 1]

A method for producing a curable composition containing an organic polymer (A), a curing catalyst (B), and a silane compound (C), wherein
the organic polymer (A) has a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the silane compound (C) has a hydrolyzable silicon group and an amino group and has a molecular weight of 100 to 1500,
the curing catalyst (B) includes
   an amidine structure-containing compound (b1e) represented by the formula (2) described above or an ammonium hydroxide compound (b1f) represented by the formula (3) described above, and
   a titanium compound or condensation product thereof (b2), the titanium compound (b2) being represented by the formula (4) described above, and
the method includes mixing the organic polymer (A) and the curing catalyst (B) to obtain an intermediate mixture, and then mixing the intermediate mixture and the silane compound (C).

### [Item 2]

The method according to item 1, wherein the organic polymer (A) includes a main chain structure including a polyoxyalkylene polymer, a saturated hydrocarbon polymer, or a (meth)acrylic ester polymer.

### [Item 3]

The method according to item 2, wherein the main chain structure of the organic polymer (A) includes a polyoxyalkylene polymer.

### [Item 4]

The method according to any one of items 1 to 3, wherein a is 3 in the formula (1).

### [Item 5]

The method according to any one of items 1 to 4, wherein d is 0 or an integer from 1 to 3 in the formula (4).

### [Item 6]

The method according to any one of items 1 to 5, wherein a weight ratio (b2)/(b1e) or (b2)/(b1f) of the titanium compound or condensation product thereof (b2) to the amidine structure-containing compound (ble) or the ammonium hydroxide compound (b1f) is from 1.0 to 10.

### [Item 7]

The method according to any one of items 1 to 6, further including preparing a mixture of the amidine structure-containing compound (b1e) or the ammonium hydroxide compound (b1f) and the titanium compound or condensation product thereof (b2) as the curing catalyst (B).

### [Item 8]

The method according to any one of items 1 to 7, wherein the curable composition further contains a silane compound (D) having a hydrolyzable silicon group, having no amino group, and having a molecular weight of 100 to 1500.

### [Item 9]

The method according to item 8, further including, after mixing the organic polymer (A) and the curing catalyst (B) to obtain the intermediate mixture, adding the silane compound (D) to the intermediate mixture and mixing the intermediate mixture and the silane compound (D).

### [Item 10]

The method according to any one of items 1 to 9, wherein an amount of the silane compound (C) is from 1 to 8 parts by weight per 100 parts by weight of the organic polymer (A).

### Examples

Hereinafter, the present invention will be described in more detail using concrete examples. The present invention is not limited to the examples given below.

The number-average molecular weights mentioned in the examples are GPC molecular weights measured under the following conditions.
Delivery system: HLC-8120 GPC manufactured by Tosoh Corporation
Column: TSKgel Super H series manufactured by Tosoh Corporation
Solvent: THF
Molecular weight: Polystyrene equivalent
Measurement temperature: 40°C

In the examples, the values of the average number of silyl groups per polymer end or per polymer molecule were calculated through H-NMR measurement (performed in a CDCl₃ solvent using AVANCE III HD-500 manufactured by Bruker).

### <Synthesis of Organic Polymer (A)>

### (Synthesis Example 1 (A-1))

Propylene oxide was polymerized using polyoxypropylene diol having a molecular weight of about 2,000 as an initiator in the presence of a zinc hexacyanocobaltate-glyme complex catalyst. This polymerization yielded polypropylene oxide having a number-average molecular weight of 28,500. Subsequently, NaOMe dissolved in methanol was added in an amount of 1.2 molar equivalents per molar equivalent of the hydroxy groups of the hydroxy-terminated polypropylene oxide, and then methanol was distilled off. Allyl chloride was further added to convert the terminal hydroxy groups to allyl groups. Allyl chloride remaining unreacted was removed by evaporation under reduced pressure. To 100 parts by weight of the resulting unpurified allyl-terminated polypropylene oxide were added 300 parts by weight of n-hexane and 300 parts by weight of water, and the mixture was stirred and then centrifuged to remove water. To the resulting hexane solution was added 300 parts by weight of water, and the mixture was stirred and then centrifuged to remove water. Hexane was subsequently removed by evaporation under reduced pressure. Thus, difunctional polypropylene oxide terminated by allyl groups and having a number-average molecular weight of about 28,500 was obtained. To 100 parts by weight of the allyl-terminated polypropylene oxide obtained was added 150 ppm of a 2-propanol solution containing a platinum-vinylsiloxane complex as a catalyst and having a platinum content of 3 wt%, and trimethoxysilane was added in an amount of 0.8 molar equivalents per molar equivalent of the allyl groups of the allyl-terminated polypropylene oxide and reacted with the allyl groups at 90°C for 5 hours to obtain trimethoxysilyl-terminated polyoxypropylene (A-1). The number of trimethoxysilyl groups was about 0.8 per polymer chain end.

### (Synthesis Example 2 (A-2))

Propylene oxide was polymerized using polyoxypropylene glycol having a number-average molecular weight of about 4,500 as an initiator in the presence of a zinc hexacyanocobaltate-glyme complex catalyst. This polymerization yielded polyoxypropylene terminated at both ends by hydroxy groups and having a number-average molecular weight of 27,900.

To 100 parts by weight of the obtained polymer terminated at both ends by hydroxy groups was added 30 ppm of a solution of bismuth(III) 2-ethylhexanoate in 2-ethylhexanoic acid (Bi: 25%), and 0.95 molar equivalents of (3-isocyanatopropyl)trimethoxysilane was added per molar equivalent of the hydroxy groups of the polymer to induce urethanization of the hydroxy groups of the polymer. Thus, trimethoxysilyl-terminated polyoxypropylene (A-2) was obtained. The number of trimethoxysilyl groups was about 0.9 per polymer chain end.

### <Method for Producing Curable Composition>

### (Example 1)

To 100 parts by weight of the reactive silicon group-containing organic polymer (A-1) were added colloidal calcium carbonate (manufactured by Shiraishi Kogyo Kaisha, Ltd. under the trade name "Hakuenka CCR"), ground calcium carbonate (manufactured by Shiraishi Calcium Kaisha, Ltd. under the trade name "Whiton SB"), a plasticizer (manufactured by BASF under the trade name "Hexamoll DINCH"), a pigment (manufactured by Ishihara Sangyo Kaisha, Ltd. under the trade name "Tipaque R820"), a thixotropic agent (manufactured by ARKEMA under the trade name "Crayvallac SLT"), an antioxidant (manufactured by BASF under the trade name "Irganox 1010"), an ultraviolet absorber (manufactured by BASF under the trade name "Tinuvin 326"), and a light stabilizer (manufactured by BASF under the trade name "Tinuvin 770"), the amounts (parts by weight) of which were as shown in Table 1. The organic polymer (A-1) and the added components were mixed by means of a spatula, and then the mixture was passed through a three-roll mill three times to disperse the components. After that, the mixture was dehydrated under reduced pressure by means of a planetary mixer, and the resulting blend was placed as a base material into a moisture-proof cartridge.

In an atmosphere with a temperature of 23°C and a relative humidity of 50%, the base material was pressed out of the cartridge and weighed into a plastic container. Dynasylan VTMO (silane compound (D): vinyltrimethoxysilane manufactured by Evonik), the amount of which was as shown in Table 1, was first added and mixed with the base material.
Subsequently, Tyzor KE-6 (titanium compound (b2): titanium diisobutoxybis(ethyl acetoacetate) manufactured by Dorf Ketal) was added and mixed with the mixture in the container, and then DBU (amidine structure-containing compound (ble): 1,8-diazabicyclo[5.4.0]-undec-7-ene manufactured by Tokyo Chemical Industry Co., Ltd.) was further added and mixed with the mixture in the container. Finally, Dynasylan AMMO (silane compound (C): γ-aminopropyltrimethoxysilane manufactured by Evonik) was added and mixed with the mixture in the container to obtain a curable composition.

### (Example 2)

A curable composition was obtained in the same manner as in Example 1, except that the order in which Tyzor KE-6 and DBU were added and mixed with the mixture in the container was reversed, that is, except that the addition and mixing of DBU (amidine structure-containing compound (ble)) was followed by the addition and mixing of Tyzor KE-6 (titanium compound (b2)).

### (Example 3)

A curable composition was obtained in the same manner as in Example 1, except that the addition and mixing of Tyzor KE-6 was not followed by the addition and mixing of DBU, but Tyzor KE-6 (titanium compound (b2)) and DBU (amidine structure-containing compound (b1e)) were individually added to the mixture in the container and then mixed with the mixture.

### (Example 4)

A curable composition was obtained in the same manner as in Example 1, except that first, Tyzor KE-6 (titanium compound (b2)) and DBU (amidine structure-containing compound (b1e)) were individually added to the base material and then mixed with the base material and that the addition and mixing of Tyzor KE-6 and DBU was followed by the addition and mixing of Dynasylan VTMO (silane compound (D)) and finally by the addition and mixing of Dynasylan AMMO (silane compound (C)).

### (Comparative Example 1)

A curable composition was obtained in the same manner as in Example 1, except that Dynasylan VTMO (silane compound (D)) was first added and mixed with the base material and that the addition and mixing of Dynasylan VTMO was followed by the addition and mixing of Dynasylan AMMO (silane compound (C)), then by the addition and mixing of Tyzor KE-6 (titanium compound (b2)), and finally by the addition and mixing of DBU (amidine structure-containing compound (b1e)).

### (Comparative Example 2)

A curable composition was obtained in the same manner as in Example 1, except that Dynasylan VTMO (silane compound (D)) was first added and mixed with the base material and that the addition and mixing of Dynasylan VTMO was followed by the addition and mixing of Dynasylan AMMO (silane compound (C)), then by the addition and mixing of DBU (amidine structure-containing compound (ble)), and finally by the addition and mixing of Tyzor KE-6 (titanium compound (b2)).

### (Comparative Example 3)

A curable composition was obtained in the same manner as in Example 1, except that Dynasylan VTMO (silane compound (D)), Dynasylan AMMO (silane compound (C)), DBU (amidine structure-containing compound (ble)), and Tyzor KE-6 (titanium compound (b2)) were individually added to the base material and then the base material and the added compounds were mixed all together.

### (Evaluation)

### (Skinning Time (Curability))

An about 5-mm-thick mold was filled with each of the obtained curable compositions by means of a spatula, and the surface of the curable composition was flattened. The moment at which the surface flattening was completed was defined as a curing start point. The time from the curing start point until the composition became non-sticky to the spatula touching the surface of the composition was measured as the skinning time (curability). The measurement results are shown in Table 1.

**[Table 1]**

| | | | Examples | | | | Comp. Examples | | |
|---|---|---|---|---|---|---|---|---|---|
| | | | 1 | 2 | 3 | 4 | 1 | 2 | 3 |
| Base material | Organic polymer (A) | (A-1) | 100 | 100 | 100 | 100 | 100 | 100 | 100 |
| | Colloidal calcium carbonate | Hakuenka CCR | 160 | 160 | 160 | 160 | 160 | 160 | 160 |
| | Ground calcium carbonate | Whiton SB | 54 | 54 | 54 | 54 | 54 | 54 | 54 |
| | Plasticizer | DINCH | 90 | 90 | 90 | 90 | 90 | 90 | 90 |
| | Pigment | Tipaque R820 | 5 | 5 | 5 | 5 | 5 | 5 | 5 |
| | Thixotropic agent | Cryvallac SLT | 5 | 5 | 5 | 5 | 5 | 5 | 5 |
| | Antioxidant | Irganox 1010 | 1 | 1 | 1 | 1 | 1 | 1 | 1 |
| | Ultraviolet absorber | Tinuvin 326 | 1 | 1 | 1 | 1 | 1 | 1 | 1 |
| | Light stabilizer | Tinuvin 770 | 1 | 1 | 1 | 1 | 1 | 1 | 1 |
| Amino group-containing silane (C) | | AMMO | 3 | 3 | 3 | 3 | 3 | 3 | 3 |
| Amino group-free silane (D) | | VTMO | 5 | 5 | 5 | 5 | 5 | 5 | 5 |
| Curing catalyst (B) | Amidine compound (ble) | DBU | 1 | 1 | 1 | 1 | 1 | 1 | 1 |
| | Titanium compound (b2) | Tyzor KE-6 | 2 | 2 | 2 | 2 | 2 | 2 | 2 |
| Production method | | | Method 1 | | | | | | |
| | | | | Method 2 | | | | | |
| | | | | | Method 3 | | | | |
| | | | | | | Method 4 | | | |
| | | | | | | | Comp. method 1 | | |
| | | | | | | | | Comp. method 2 | |
| | | | | | | | | | Comp. method 3 |
| Curability | | Skinning time | 8 min | 10 min | 9 min | 6 min | 26 min | 26 min | 29 min |

| | |
|---|---|
| Method 1: | Mixing of (A) + (D)→mixing of (b2)→mixing of (b1e)→mixing of(C) |
| Method 2: | Mixing of (A) + (D)→mixing of (b1c)→mixing of (b2)→mixing of (C) |
| Method 3: | Mixing of(A) + (D)→mixing of (b1c) and (b2)→mixing of (C) |
| Method 4: | Mixing of (A) + (b1e) + (b2)→mixing of (D)→mixing of (C) |
| Comp. method 1: | Mixing of(A) + (D)→mixing of(C)→mixing of (b2)→mixing of (b1e) |
| Comp. method 2: | Mixing of(A) + (D)→mixing of (C)→mixing of (b1e)→mixing of (b2) |
| Comp. method 3: | Components were mixed all together. |

### (Results)

The curable compositions of Examples 1 to 4, which were obtained by first mixing the organic polymer (A) and the curing catalyst (B) and then mixing the silane compound (C) with the mixture of the organic polymer (A) and the curing catalyst (B), cured faster than the curable compositions of Comparative Examples 1 and 2 which were obtained by first mixing the organic polymer (A) and the silane compound (C) and then mixing the curing catalyst (B) with the mixture of the organic polymer (A) and the silane compound (C) and than the curable composition of Comparative Example 3 which was obtained by mixing the organic polymer (A), the curing catalyst (B), and the silane compound (C) all together.

### (Examples 5 to 9)

Curable compositions were obtained in the same manner as in Example 1, except that the amount of DBU (amidine structure-containing compound (b1e)) or Dynasylan AMMO (silane compound (C)) was changed. The measurement of the skinning time (curability) was also conducted as described above. The results are shown in Table 2.

**[Table 2]**

| | | | Examples | | | | |
|---|---|---|---|---|---|---|---|
| | | | 5 | 6 | 7 | 8 | 9 |
| Base material | Organic polymer (A) | (A-1) | 100 | 100 | 100 | 100 | 100 |
| | Colloidal calcium carbonate | Hakuenka CCR | 160 | 160 | 160 | 160 | 160 |
| | Ground calcium carbonate | Whiton SB | 54 | 54 | 54 | 54 | 54 |
| | Plasticizer | DINCH | 90 | 90 | 90 | 90 | 90 |
| | Pigment | Tipaque R820 | 5 | 5 | 5 | 5 | 5 |
| | Thixotropic agent | Cryvallac SLT | 5 | 5 | 5 | 5 | 5 |
| | Antioxidant | Irganox 1010 | 1 | 1 | 1 | 1 | 1 |
| | Ultraviolet absorber | Tinuvin 326 | 1 | 1 | 1 | 1 | 1 |
| | Light stabilizer | Tinuvin 770 | 1 | 1 | 1 | 1 | 1 |
| Amino group-containing silane (C) | | AMMO | 3 | 3 | 6 | 3 | 3 |
| Amino group-free silane (D) | | VTMO | 5 | 5 | 5 | 5 | 5 |
| Curing catalyst (B) | Amidine compound (ble) | DBU | 0.5 | 0.75 | 1 | 1.5 | 2 |
| | Titanium compound (b2) | Tyzor KE-6 | 2 | 2 | 2 | 2 | 2 |
| Production method | | | Method 1 | | | | |
| Curability | | Skinning time | 23 min | 14 min | 12 min | 10 min | 12 min |

### (Results)

All of the curable compositions of Examples 5 to 9 cured fast.

### (Examples 10 to 13)

Curable compositions were obtained in the same manner as in Example 1, except that titanium compounds listed in Table 3 (the details of the compounds are as described below) were used as the titanium compound (b2) instead of Tyzor KE-6. The measurement of the skinning time (curability) was also conducted as described above. The results are shown in Table 3.
Ti(OBu)₄: Titanium tetrabutoxide, manufactured by Tokyo Chemical Industry Co., Ltd.
Tyzor 9000: Titanium tetra-tert-butoxide, manufactured by Dorf Ketal
Ti(OⁱPr)₄: Titanium tetraisopropoxide, manufactured by Tokyo Chemical Industry Co., Ltd.
TC-750: Titanium diisopropoxybis(ethyl acetoacetate), manufactured by Matsumoto Fine Chemical Co., Ltd.

### (Comparative Examples 4 to 8)

Curable compositions were obtained in the same manner as in Comparative Example 1, except that titanium compounds listed in Table 3 were used as the titanium compound (b2) instead of Tyzor KE-6 and that in Comparative Example 8 the amount of Dynasylan AMMO (silane compound (C)) was changed. The measurement of the skinning time (curability) was also conducted as described above. The results are shown in Table 3.

**[Table 3]**

| | | | Examples | | | | Comp. Examples | | | | |
|---|---|---|---|---|---|---|---|---|---|---|---|
| | | | 10 | 11 | 12 | 13 | 4 | 5 | 6 | 7 | 8 |
| Base material | Organic polymer (A) | (A-1) | 100 | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 | 160 |
| | Ground calcium carbonate | Whiton SB | 54 | 54 | 54 | 54 | 54 | 54 | 54 | 54 | 54 |
| | Plasticizer | DINCH | 90 | 90 | 90 | 90 | 90 | 90 | 90 | 90 | 90 |
| | Pigment | Tipaque R820 | 5 | 5 | 5 | 5 | 5 | 5 | 5 | 5 | 5 |
| | Thixotropic agent | Cryvallac SLT | 5 | 5 | 5 | 5 | 5 | 5 | 5 | 5 | 5 |
| | Antioxidant | Irganox 1010 | 1 | 1 | 1 | 1 | 1 | 1 | 1 | 1 | 1 |
| | Ultraviolet absorber | Tinuvin 326 | 1 | 1 | 1 | 1 | 1 | 1 | 1 | 1 | 1 |
| | Light stabilizer | Tinuvin 770 | 1 | 1 | 1 | 1 | 1 | 1 | 1 | 1 | 1 |
| Amino group-containing silane (C) | | AMMO | 3 | 3 | 3 | 3 | 3 | 3 | 3 | 3 | 5 |
| Amino group-free silane (D) | | VTMO | 5 | 5 | 5 | 5 | 5 | 5 | 5 | 5 | 5 |
| Curing catalyst (B) | Amidine compound (ble) | DBU | 1 | 1 | 1 | 1 | 1 | 1 | 1 | 1 | 1 |
| | Titanium compound (b2) | Ti(OBu)₄ | 2 | | | | 2 | | | | |
| | | Tyzor 9000 | | 2 | | | | 2 | | | |
| | | Ti(O*ⁱ*Pr)₄ | | | 2 | | | | 2 | | |
| | | TC-750 | | | | 2 | | | | 2 | 2 |
| Production method | | | Method 1 | | | | | | | | |
| | | | | | | | Comp. method 1 | | | | |
| Curability | | Skinning time | 31 min | 15 min | 24 min | 14 min | 50 min | 80 min | 53 min | 30 min | 52 min |

### (Results)

The curable compositions of Examples 10 to 13, which were obtained by first mixing the organic polymer (A) and the curing catalyst (B) and then mixing the silane compound (C) with the mixture of the organic polymer (A) and the curing catalyst (B), cured faster than the curable compositions of Comparative Examples 4 to 8 which were obtained by first mixing the organic polymer (A) and the silane compound (C) and then mixing the curing catalyst (B) with the mixture of the organic polymer (A) and the silane compound (C). It should be noted that the comparison is made between an example and a comparative example where the same titanium compound was used; for example, the curable composition of Example 10 cured faster than that of Comparative Example 4.

### (Examples 14 to 17)

Curable compositions were obtained in the same manner as in Example 1, except that DBN (1,5-diazabicyclo[4.3.0]non-5-ene, manufactured by San-Apro Ltd.) was used as the amidine structure-containing compound (b1e) instead of DBU and that titanium compounds listed in Table 4 were used as the titanium compound (b2). The measurement of the skinning time (curability) was also conducted as described above. The results are shown in Table 4.

### (Comparative Examples 9 to 12)

Curable compositions were obtained in the same manner as in Comparative Example 1, except that DBN was used as the amidine structure-containing compound (ble) instead of DBU and that titanium compounds listed in Table 4 were used as the titanium compound (b2). The measurement of the skinning time (curability) was also conducted as described above. The results are shown in Table 4.

**[Table 4]**

| | | | Examples | | | | Comp. Examples | | | |
|---|---|---|---|---|---|---|---|---|---|---|
| | | | 14 | 15 | 16 | 17 | 9 | 10 | 11 | 12 |
| Base material | Organic polymer (A) | (A-1) | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 |
| | Ground calcium carbonate | Whiton SB | 54 | 54 | 54 | 54 | 54 | 54 | 54 | 54 |
| | Plasticizer | DINCH | 90 | 90 | 90 | 90 | 90 | 90 | 90 | 90 |
| | Pigment | Tipaque R820 | 5 | 5 | 5 | 5 | 5 | 5 | | 5 |
| | Thixotropic agent | Cryvallac SLT | 5 | 5 | 5 | 5 | 5 | 5 | 5 | 5 |
| | Antioxidant | Irganox 1010 | 1 | 1 | 1 | 1 | 1 | 1 | 1 | 1 |
| | Ultraviolet absorber | Tinuvin 326 | 1 | 1 | 1 | 1 | 1 | 1 | 5 1 | 1 |
| | Light stabilizer | Tinuvin 770 | 1 | 1 | 1 | 1 | 1 | 1 | 1 | 1 |
| Amino group-containing silane (C) | | AMMO | 3 | 3 | 3 | 3 | 3 | 3 | 3 | 3 |
| Amino group-free silane (D) | | VTMO | 5 | 5 | 5 | 5 | 5 | 5 | 5 | 5 |
| Curing catalyst (B) | Amidine compound (ble) | DBN | 1 | 1 | 1 | 1 | 1 | 1 | 1 | 1 |
| | Titanium compound (b2) | Tyzor 9000 | 2 | | | | 2 | | | |
| | | Ti(O*ⁱ*Pr)₄ | | 2 | | | | 2 | | |
| | | TC-750 | | | 2 | | | | 2 | |
| | | Tyzor KE-6 | | | | 2 | | | | 2 |
| Production method | | | Method 1 | | | | | | | |
| | | | | | | | Comp. method 1 | | | |
| Curability | | Skinning time | 25 min | 17 min | 19 min | 114 min | > 90 min | 49 min | 63 min | 43 min |

### (Results)

The curable compositions of Examples 14 to 17, which were obtained by first mixing the organic polymer (A) and the curing catalyst (B) and then mixing the silane compound (C) with the mixture of the organic polymer (A) and the curing catalyst (B), cured faster than the curable compositions of Comparative Examples 9 to 12 which were obtained by first mixing the organic polymer (A) and the silane compound (C) and then mixing the curing catalyst (B) with the mixture of the organic polymer (A) and the silane compound (C).

### (Examples 18 to 21)

Curable compositions were obtained in the same manner as in Example 1, except that 2 parts by weight of TBAOH (ammonium hydroxide compound (b1f): 37% methanol solution of tetrabutylammonium hydroxide, manufactured by Tokyo Chemical Industry Co., Ltd.) was used instead of DBU (amidine structure-containing compound (ble)) and that titanium compounds listed in Table 5 were used as the titanium compound (b2). The measurement of the skinning time (curability) was also conducted as described above. The results are shown in Table 5.

### (Comparative Examples 13 to 16)

Curable compositions were obtained in the same manner as in Comparative Example 1, except that 2 parts by weight of TBAOH (ammonium hydroxide compound (b1f)) was used instead of DBU (amidine structure-containing compound (ble)) and that titanium compounds listed in Table 5 were used as the titanium compound (b2). The measurement of the skinning time (curability) was also conducted as described above. The results are shown in Table 5.

**[Table 5]**

| | | | Examples | | | | Comp. Examples | | | |
|---|---|---|---|---|---|---|---|---|---|---|
| | | | 18 | 19 | 20 | 21 | 13 | 14 | 15 | 16 |
| Base material | Organic polymer (A) | (A-1) | 100 | 100 | 100 | 100 | 100 | 100 | 100 | 100 |
| | Colloidal calcium carbonate | Hakuenka CCR | 160 | 160 | 160 | 160 | 160 | 160 | 160 | 160 |
| | Ground calcium carbonate | Whiton SB | 54 | 54 | 54 | 54 | 54 | 54 | 54 | 54 |
| | Plasticizer | DINCH | 90 | 90 | 90 | 90 | 90 | 90 | 90 | 90 |
| | Pigment | Tipaque R820 | 5 | 5 | 5 | 5 | 5 | 5 | 5 | 5 |
| | Thixotropic agent | Cryvallac SLT | 5 | 5 | 5 | 5 | 5 | 5 | 5 | 5 |
| | Antioxidant | Irganox 1010 | 1 | 1 | 1 | 1 | 1 | 1 | 1 | 1 |
| | Ultraviolet absorber | Tinuvin 326 | 1 | 1 | 1 | 1 | 1 | 1 | 1 | 1 |
| | Light stabilizer | Tinuvin 770 | 1 | 1 | 1 | 1 | 1 | 1 | 1 | 1 |
| Amino group-containing silane (C) | | AMMO | 3 | 3 | 3 | 3 | 3 | 3 | 3 | 3 |
| Amino group-free silane (D) | | VTMO | 5 | 5 | 5 | 5 2 | 5 | 5 | 5 | 5 |
| Curing catalyst (B) | Ammonium hydroxide (b1t) | TBAOH | 2 | 2 | 2 | | 2 | 2 | 2 | 2 |
| | Titanium compound (b2) | Tyzor 9000 | 2 | | | | 2 | | | |
| | | Ti(O*ⁱ*Pr)₄ | | 2 | | | | 2 | | |
| | | TC-750 | | | 2 | | | | 2 | |
| | | Tyzor KE-6 | | | | 2 | | | | 2 |
| Production method | | | Method 1 | | | | | | | |
| | | | | | | | Comp. method 1 | | | |
| Curability | | Skinning time | 3 min | 3 min | 8 min | 8 min | 16 min | 10 min | 14 min | 16 min |

### (Results)

The curable compositions of Examples 18 to 21, which were obtained by first mixing the organic polymer (A) and the curing catalyst (B) and then mixing the silane compound (C) with the mixture of the organic polymer (A) and the curing catalyst (B), cured faster than the curable compositions of Comparative Examples 13 to 16 which were obtained by first mixing the organic polymer (A) and the silane compound (C) and then mixing the curing catalyst (B) with the mixture of the organic polymer (A) and the silane compound (C).

### (Examples 22 to 24)

Curable compositions were obtained in the same manner as in Example 1, except that 1 part by weight of TBAOH (ammonium hydroxide compound (b1f)) was used instead of DBU (amidine structure-containing compound (ble)) and that titanium compounds listed in Table 6 were used as the titanium compound (b2). The measurement of the skinning time (curability) was also conducted as described above. The results are shown in Table 6.

### (Comparative Examples 17 to 19)

Curable compositions were obtained in the same manner as in Comparative Example 1, except that 1 part by weight of TBAOH (ammonium hydroxide compound (b1f)) was used instead of DBU (amidine structure-containing compound (ble)) and that titanium compounds listed in Table 6 were used as the titanium compound (b2). The measurement of the skinning time (curability) was also conducted as described above. The results are shown in Table 6.

**[Table 6]**

| | | | Examples | | | Comp. Examples | | |
|---|---|---|---|---|---|---|---|---|
| | | | 22 | 23 | 24 | 17 | 18 | 19 |
| Base material | Organic polymer (A) | (A-1) | 100 | 100 | 100 | 100 | 100 | 100 |
| | Colloidal calcium carbonate | Hakuenka CCR | 160 | 160 | 160 | 160 | 160 | 160 |
| | Ground calcium carbonate | Whiton SB | 54 | 54 | 54 | 54 | 54 | 54 |
| | Plasticizer | DINCH | 90 | 90 | 90 | 90 | 90 | 90 |
| | Pigment | Tipaque R820 | 5 | 5 | 5 | 5 | 5 | 5 |
| | Thixotropic agent | Cryvallac SLT | 5 | 5 | 5 | 5 | 5 | 5 |
| | Antioxidant | Irganox 1010 | 1 | 1 | 1 | 1 | 1 | 1 |
| | Ultraviolet absorber | Tinuvin 326 | 1 | 1 | 1 | 1 | 1 | 1 |
| | Light stabilizer | Tinuvin 770 | 1 | 1 | 1 | 1 | 1 | 1 |
| Amino group-containing silane (C) | | AMMO | 3 | 3 | 3 | 3 | 3 | 3 |
| Amino group-free silane (D) | | VTMO | 5 | 5 | 5 | 5 | 5 | 5 |
| Curing catalyst (B) | Ammonium hydroxide (b1f) | TBAOH | 1 | 1 | 1 | 1 | 1 | 1 |
| | Titanium compound (b2) | Ti(OBu)₄ | 2 | | | 2 | | |
| | | Tyzor 9000 | | 2 | | | 2 | |
| | | Ti(O*ⁱ*Pr)₄ | | | 2 | | | 2 |
| Production method | | | Method 1 | | | | | |
| | | | | | | Comp. method 1 | | |
| Curability | | Skinning time | 13 min | 8 min | 10 min | 25 min | 21 min | 30 min |

### (Results)

The curable compositions of Examples 22 to 24, which were obtained by first mixing the organic polymer (A) and the curing catalyst (B) and then mixing the silane compound (C) with the mixture of the organic polymer (A) and the curing catalyst (B), cured faster than the curable compositions of Comparative Examples 17 to 19 which were obtained by first mixing the organic polymer (A) and the silane compound (C) and then mixing the curing catalyst (B) with the mixture of the organic polymer (A) and the silane compound (C).

### (Example 25)

A curable composition was obtained in the same manner as in Example 1, except that the organic polymer (A-2) was used instead of the organic polymer (A-1). The measurement of the skinning time (curability) was also conducted as described above. The result is shown in Table 7.

### (Comparative Example 20)

A curable composition was obtained in the same manner as in Comparative Example 1, except that the organic polymer (A-2) was used instead of the organic polymer (A-1). The measurement of the skinning time (curability) was also conducted as described above. The result is shown in Table 7.

**[Table 7]**

| | | | Example | Comp. Example |
|---|---|---|---|---|
| | | | 25 | 20 |
| Base material | Organic polymer (A) | (A-2) | 100 | 100 |
| | Colloidal calcium carbonate | Hakuenka CCR | 160 | 160 |
| | Ground calcium carbonate | Whiton SB | 54 | 54 |
| | Plasticizer | DINCH | 90 | 90 |
| | Pigment | Tipaque R820 | 5 | 5 |
| | Thixotropic agent | Cryvallac SLT | 5 | 5 |
| | Antioxidant | Irganox 1010 | 1 | 1 |
| | Ultraviolet absorber | Tinuvin 326 | 1 | 1 |
| | Light stabilizer | Tinuvin 770 | 1 | 1 |
| Amino group-containing silane (C) | | AMMO | 3 | 3 |
| Amino group-free silane (D) | | VTMO | 5 | 5 |
| Curing catalyst (B) | Amidine compound (ble) | DBU | 1 | 1 |
| | Titanium compound (b2) | Tyzor KE-6 | 2 | 2 |
| Production method | | | Method 1 | |
| | | | | Comp. method 1 |
| Curability | | Skinning time | 1 min | 3 min |

### (Results)

The curable composition of Example 25, which was obtained by first mixing the organic polymer (A) and the curing catalyst (B) and then mixing the silane compound (C) with the mixture of the organic polymer (A) and the curing catalyst (B), cured faster than the curable composition of Comparative Example 20 which was obtained by first mixing the organic polymer (A) and the silane compound (C) and then mixing the curing catalyst (B) with the mixture of the organic polymer (A) and the silane compound (C).

### (Examples 26 and 27)

To 100 parts by weight of the reactive silicon group-containing organic polymer (A-1) were added colloidal calcium carbonate (Hakuenka CCR), ground calcium carbonate (Whiton SB), a plasticizer (Hexamoll DINCH), a pigment (Tipaque R820), a thixotropic agent (Crayvallac SLT), an antioxidant (Irganox 1010), an ultraviolet absorber (manufactured by BASF under the trade name "Tinuvin 928"), and a light stabilizer (manufactured by BASF under the trade name "Tinuvin 123"), the amounts (parts by weight) of which were as shown in Table 8. The organic polymer (A-1) and the added components were mixed by means of a spatula, and then the mixture was passed through a three-roll mill three times to disperse the components. After that, the mixture was dehydrated under reduced pressure by means of a planetary mixer and cooled below 50°C. Dynasylan VTMO was then added as the silane compound (D) and mixed with the cooled mixture. The addition and mixing of the silane compound (D) was followed by the addition of mixing of the titanium compound (b2) and then by the addition and mixing of the amidine structure-containing compound (ble) or ammonium hydroxide compound (b1f). Finally, Dynasylan AMMO was added as the silane compound (C) and mixed with the mixture of the other components, and then the resulting mixture was placed into a moisture-proof cartridge. In this manner, a one-part curable composition was obtained.

**[Table 8]**

| | | | Examples | |
|---|---|---|---|---|
| | | | 26 | 27 |
| Base material | Organic polymer (A) | (A-1) | 100 | 100 |
| | Colloidal calcium carbonate | Hakuenka CCR | 160 | 160 |
| | Ground calcium carbonate | Whiton SB | 54 | 54 |
| | Plasticizer | DINCH | 90 | 90 |
| | Pigment | Tipaque R820 | 5 | 5 |
| | Thixotropic agent | Cryvallac SLT | 5 | 5 |
| | Antioxidant | Irganox 1010 | 1 | 1 |
| | Ultraviolet absorber | Tinuvin 928 | 1 | 1 |
| | Light stabilizer | Tinuvin 123 | 1 | 1 |
| Amino group-containing silane (C) | | AMMO | 3 | 3 |
| Amino group-free silane (D) | | VTMO | 5 | 5 |
| Curing catalyst (B) | Amidine compound (ble) | DBU | 1 | |
| | | DBN | | 1 |
| | Titanium compound (b2) | TC-750 | 2 | 2 |

| Production method | | | Method 1 | |
|---|---|---|---|---|
| Evaluation | Curability | Pre-storage skinning time | 7 min | 14 min |
| | | Post-storage skinning time | 7 min | 11 min |
| | Viscosity | Pre-storage viscosity (Pa•s) | 1410 | 1296 |
| | | Post-storage viscosity (Pa•s) | 1530 | 1488 |
| | Storage stability | Skinning time change ratio | 1 | 0.8 |
| | | Viscosity change ratio | 1.1 | 1.2 |
| | Adhesion | Glass sheet | CF | CF |
| | | Anodized aluminum sheet | CF | CF |
| | | Stainless steel sheet | CF | CF |
| | | Vinyl chloride sheet | CF | AF |
| | | Polyacrylic sheet | CF | CF |
| | | FRP sheet | CF | CF |
| | | Beech wood | CF | CF |
| | | Mortar | CF | AF |
| | Occurrence of bleeding | 23°C × 7 days | Did not occur | Did not occur |
| | Dumbbell tensile properties | Modulus at 50% elongation (MPa) | 0.20 | 0.23 |
| | | Modulus at 100% elongation (MPa) | 0.35 | 0.39 |
| | | Tensile strength at break (MPa) | 1.93 | 1.98 |
| | | Elongation at break (%) | 1087 | 1006 |

### (Evaluation)

### (Skinning Time (Curability))

Each curable composition was stored in an atmosphere with a temperature of 23°C and a relative humidity of 50% for 7 days. After that, the skinning time (curability) was measured by the method as described above. The results obtained were shown as "Pre-storage skinning time" in Table 8.

In addition, after the 7-day storage at 23°C, each curable composition was further stored at 50°C for 28 days and then at 23°C for 1 day. After that, the skinning time (curability) was measured by the method as described above. The results obtained were shown as "Post-storage skinning time" in Table 8.

The curable compositions of Examples 26 and 27, which were obtained by first mixing the organic polymer (A) and the curing catalyst (B) and then mixing the silane compound (C) with the mixture of the organic polymer (A) and the curing catalyst (B), both exhibited good curability.

### (Viscosity)

Each curable composition was stored at 23°C for 7 days, after which the 2 rpm viscosity of the curable composition was measured using a BS-type viscometer manufactured by Tokyo Keiki Inc. and a rotor No.7 in an atmosphere with a temperature of 23°C and a relative humidity of 50%. The results obtained are shown as "Pre-storage viscosity" in Table 8.

In addition, after the 7-day storage at 23°C, each curable composition was further stored at 50°C for 28 days and then at 23°C for 1 day. After that, the 2 rpm viscosity of the curable composition was measured by the method as described above. The results obtained are shown as "Post-storage viscosity" in Table 8.

### (Storage Stability)

Using the results obtained as above, the change ratio of the post-storage skinning time to the pre-storage skinning time (post-storage/pre-storage) and the change ratio of the post-storage viscosity to the pre-storage viscosity (post-storage/pre-storage) were determined. The results are shown in Table 8. The closer the change ratio is to 1, the better the storage stability is.

For both of the curable compositions of Examples 26 and 27, which were obtained by first mixing the organic polymer (A) and the curing catalyst (B) and then mixing the silane compound (C) with the mixture of the organic polymer (A) and the curing catalyst (B), the skinning time change ratio and the viscosity change ratio were close to 1. That is, the curable compositions exhibited good storage stability without any substantial delay of curing or increase in viscosity caused by the storage.

### (Adhesion)

Each curable composition was applied to the surfaces of various substrates listed in Table 8 and cured at a constant temperature of 23°C and a constant relative humidity of 50% for 7 days. Each of the resulting cured products was subjected to a 90° hand peel test, and the failure mode was visually inspected. The failure mode was classified as cohesive failure (breakage occurred in the cured product) or adhesive failure (peeling occurred at the interface between the cured product and the substrate). The cohesive failure is denoted by CF and the adhesive failure is denoted by AF. The results are shown in Table 8.

The curable compositions of Examples 26 and 27, which were obtained by first mixing the organic polymer (A) and the curing catalyst (B) and then mixing the silane compound (C) with the mixture of the organic polymer (A) and the curing catalyst (B), both exhibited good adhesion to the various substrates.

### (Occurrence of Bleeding)

At a constant temperature of 23°C and a constant relative humidity of 50%, each curable composition was applied onto a corrugated fiberboard and formed into a sheet by means of a spatula, and the surface of the curable composition was flattened. The curable composition was left for 7 days, after which the surface of the curable composition was touched with a fingertip to examine whether a DBU-derived liquid compound bled out on the surface of the cured product. The results are shown in Table 8.

Bleeding of the liquid compound was not observed on the surfaces of the cured products resulting from curing the curable compositions of Examples 26 to 27 which were obtained by first mixing the organic polymer (A) and the curing catalyst (B) and then mixing the silane compound (C) with the mixture of the organic polymer (A) and the curing catalyst (B).

### (Dumbbell Tensile Properties)

At a constant temperature of 23°C and a constant relative humidity of 50%, a 3-mm-thick sheet-shaped mold was filled with each curable composition. The curable composition was cured at 23°C and 50% RH for 3 days, after which the composition was aged in a dryer at 50°C for 4 days to obtain a sheet-shaped cured product.

The cured product obtained was punched to give a No. 3 dumbbell specimen according to JIS K 6251, and the specimen was subjected to a tensile test (tensile speed = 200 mm/min) using Autograph to measure the modulus at 50% elongation, the modulus at 100% elongation, the tensile strength at break, and the elongation at break of the specimen. The results are shown in Table 8.

The cured products resulting from curing the curable compositions of Examples 26 and 27, which were obtained by first mixing the organic polymer (A) and the curing catalyst (B) and then mixing the silane compound (C) with the mixture of the organic polymer (A) and the curing catalyst (B), both exhibited good tensile properties.

### (Example 28)

The following components were mixed: 70 parts by weight of the reactive silicon group-containing organic polymer (A-1); 4 parts by weight of Ancamine K54 (2,4,6-tris(dimethylaminomethyl)phenol, manufactured by Evonik) as an epoxy resin-curing agent; 1 part by weight of Dynasylan VTMO as the silane compound (D); 1 part by weight of DBU as the amidine structure-containing compound (ble); and 2 parts by weight of TC-750 as the titanium compound (b2). The mixture was finally mixed with 2 parts by weight of Dynasylan AMMO as the silane compound (C), and thus Material A was obtained.

Material B was obtained by mixing 30 parts by weight of jER 828 (bisphenol A epoxy resin, manufactured by Mitsubishi Chemical Corporation) as an epoxy resin (D) and 0.5 parts by weight of water.

The Materials A and B were thoroughly mixed, and the skinning time (curability) of the mixture was measured by the method as described above. The result is shown in Table 9.

### (Example 29)

One hundred parts by weight of the reactive silicon group-containing organic polymer (A-1), 1 part by weight of Dynasylan VTMO, 1 part by weight of DBU, and 2 parts by weight of TC-750 were mixed, and the mixture was finally mixed with 2 parts by weight of Dynasylan AMMO to obtain Material A.

Material B was obtained by mixing 30 parts by weight of Acclaim 12200 (polyether polyol plasticizer, manufactured by Covestro) as a plasticizer and 0.5 parts by weight of water.

The skinning time (curability) was measured in the same manner as in Example 28. The result is shown in Table 9.

**[Table 9]**

| Component proportions (parts by weight) | | | | Example 28 | Example 29 |
|---|---|---|---|---|---|
| Material A | Organic polymer (A) | A-1 | | 70 | 100 |
| | Epoxy resin-curing agent | Ancamine K54 | | 4 | |
| | Amino group-containing silane (C) | Dynasylan AMMO | | 2 | 2 |
| | Amino group-free silane (D) | Dynasylan VTMO | | 1 | 1 |
| | Curing catalyst (B) | Amidine compound (b1e) | DBU | 1 | 1 |
| | | Titanium compound (b2) | TC-750 | 2 | 2 |
| | Production method | | | Method 5 | |
| Material B | Epoxy resin | jER828 | | 30 | |
| | Plasticizer | Acclaim12200 | | | 30 |
| | Water | | | 0.5 | 0.5 |
| Curability | | Skinning time | | 15 min | 20 min |

| | |
|---|---|
| Method 5: | Mixing of (A) + (D) + (b1e) + (b2)→mixing of (C) I |

### (Results)

The curable compositions of Examples 28 and 29, which were obtained by first mixing the organic polymer (A) and the curing catalyst (B) and then mixing the silane compound (C) with the mixture of the organic polymer (A) and the curing catalyst (B), cured fast.

## Claims

1. A method for producing a curable composition containing an organic polymer (A), a curing catalyst (B), and a silane compound (C), wherein
the organic polymer (A) has a reactive silicon group represented by the following formula (1): -SiR¹₃₋ₐXₐ (1), wherein R¹ is a substituted or unsubstituted hydrocarbon group having 1 to 20 carbon atoms or a triorganosiloxy group represented by R⁰₃SiO- wherein the three R⁰ groups are the same or different and are each a hydrocarbon group having 1 to 20 carbon atoms, X is a hydroxy group or a hydrolyzable group, a is 1, 2, or 3, and when there are a plurality of R¹ or X groups, the R¹ or X groups may be the same or different,
the silane compound (C) has a hydrolyzable silicon group and an amino group and has a molecular weight of 100 to 1500,
the curing catalyst (B) comprises an amidine structure-containing compound (b1e) or an ammonium hydroxide compound (b1f), and a titanium compound or condensation product thereof (b2),
the amidine structure-containing compound (b1e) is represented by the following formula (2): R²N=CR³-NR⁴₂ (2), wherein R², R³, and R⁴ are the same or different and are each a hydrogen atom or a substituted or unsubstituted hydrocarbon group having 1 to 20 carbon atoms, the two R⁴ groups may be the same or different, and two or more of R², R³, and the two R⁴ groups may be linked to form a cyclic structure,
the ammonium hydroxide compound (b1f) is represented by the following formula (3): 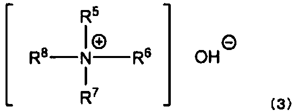 , wherein R⁵, R⁶, R⁷, and R⁸ are the same or different and are each a substituted or unsubstituted hydrocarbon group having 1 to 10 carbon atoms,
the titanium compound (b2) is represented by the following formula (4): Ti(OR⁹)_{d}Y_{4-d} (4), wherein R⁹ is a substituted or unsubstituted hydrocarbon group having 1 to 20 carbon atoms, Y is a chelate coordination compound, and d is 0 or an integer from 1 to 4, and
the method comprises mixing the organic polymer (A) and the curing catalyst (B) to obtain an intermediate mixture, and then mixing the intermediate mixture and the silane compound (C).

2. The method according to claim 1, wherein the organic polymer (A) comprises a main chain structure comprising a polyoxyalkylene polymer, a saturated hydrocarbon polymer, or a (meth)acrylic ester polymer.

3. The method according to claim 2, wherein the main chain structure of the organic polymer (A) comprises a polyoxyalkylene polymer.

4. The method according to any one of claims 1 to 3, wherein a is 3 in the formula (1).

5. The method according to any one of claims 1 to 3, wherein d is 0 or an integer from 1 to 3 in the formula (4).

6. The method according to any one of claims 1 to 3, wherein a weight ratio (b2)/(b1e) or (b2)/(b1f) of the titanium compound or condensation product thereof (b2) to the amidine structure-containing compound (b1e) or the ammonium hydroxide compound (b1f) is from 1.0 to 10.

7. The method according to any one of claims 1 to 3, further comprising preparing a mixture of the amidine structure-containing compound (b1e) or the ammonium hydroxide compound (b1f) and the titanium compound or condensation product thereof (b2) as the curing catalyst (B).

8. The method according to any one of claims 1 to 3, wherein the curable composition further contains a silane compound (D) having a hydrolyzable silicon group, having no amino group, and having a molecular weight of 100 to 1500.

9. The method according to claim 8, further comprising, after mixing the organic polymer (A) and the curing catalyst (B) to obtain the intermediate mixture, adding the silane compound (D) to the intermediate mixture and mixing the intermediate mixture and the silane compound (D).

10. The method according to any one of claims 1 to 3, wherein an amount of the silane compound (C) is from 1 to 8 parts by weight per 100 parts by weight of the organic polymer (A).
